# EUROPEAN PATENT APPLICATION

(11) **EP 4 239 891 A1**
(43) Date of publication of application: **06.09.2023**
(21) Application number: 21883049.5
(22) Date of filing: 29.09.2021
(51) Int. Cl.: H04B 1/401, H04M 1/02, H04B 1/00, H04B 1/50

(54) **ELECTRONIC DEVICE FOR OPERATING TRANSMISSION PATH AND CONTROL METHOD THEREFOR**

(30) Priority: 19.10.2020 KR 20200135468
(71) Applicant: Samsung Electronics Co., Ltd., Suwon-si, Gyeonggi-do 16677 (KR)
(72) Inventor: LEE, Dongju, Suwon-si Gyeonggi-do 16677 (KR); PARK, Junghyun, Suwon-si Gyeonggi-do 16677 (KR); AHN, Sewoong, Suwon-si Gyeonggi-do 16677 (KR); JIN, Suho, Suwon-si Gyeonggi-do 16677 (KR); CHOI, Wonjin, Suwon-si Gyeonggi-do 16677 (KR)
(74) Representative: HGF
(86) International application number: PCT/KR2021/013320
(87) International publication number: WO 2022/085977

(57) **Abstract**

Various embodiments of the present disclosure relate to a device capable of adaptively replacing or changing a transmission path to transmit a reference signal in an electronic device having a multi-state structure. To this end, the electronic device may switch a first reference signal in a first frequency band into one of at least two antenna elements, determine an antenna element to switch the first reference signal from among the at least two antenna elements in consideration of an operation state of the electronic device according to the multi-state structure, and perform control of the switching according to the determination. Various other embodiments may be possible.

## Description

### [Technical Field]

Various embodiments of the disclosure relate to an electronic device for operating a transmission path of a reference signal and a method of controlling the same.

### [Background Art]

A 5^{th} generation (5G) communication system or a pre-5G communication system (hereinafter, used as a `SG communication system') has been introduced to meet increasing traffic demands after commercialization of a 4^{th} generation (4G) communication system. The 5G communication system is called a beyond-4G-network communication system or a post-long-term evolution (LTE) system.

The 3^{rd} generation partnership project (3GPP) have prepared a 5G new radio (NR) standard for the 5G system in order to improve a transmission rate and shorten a delay time in compared to the 4G communication system. In the 5G NR standard, an NR frequency band (frequency range (FR)) to be used for wireless communication is divided into a first NR frequency band (FR1) and a second NR frequency band (FR2). FR1 indicates a sub-6 band (for example, 410 MHz to 6 GHz (or 7.125 GHz) and FR2 indicates a millimeter wave (mmWave) band (for example, 24.25 GHz to 52.6 GHz).

### [Disclosure of Invention]

### [Technical Problem]

A 5G communication system provides wireless communication in a high-frequency band having short wavelengths and strong directivity. The 5G communication system that transmits and receives signals using a high-frequency band in a free space, may be vulnerable to signal attenuation. Beamforming, massive MIMO, full dimensional MIMO (FD-MIMO), array antenna, analog beamforming, small cell, and/or large scale antenna technologies may be applied to the 5G communication system in order to mitigate path loss and/or increase the transmission range.

The 5G communication system prepares schemes for improving the uplink and/or downlink channel quality. One of the schemes can improve the uplink and/or downlink channel quality by using a reference signal (RS). The reference signal may be, for example, a sounding reference signal (SRS).

A user equipment (UE) may transmit the SRS through multiple antennas. A base station (BS) (for example, gNB) may estimate the uplink (LTL) quality, based on the SRS received from the LTE. The BS may also predict the downlink (DL) quality using the uplink quality estimated based on the SRS.

As described above, the BS may measure an environment for channels corresponding to multiple paths in consideration of characteristics, such as a signal intensity of the SRS received through the uplink. The BS may support beamforming for the UE in consideration of the measured channel environment. The BS may allocate an optimized beam to the UE in order to improve the channel quality with the UE. The optimized beam for the UE may be divided into a beam for the uplink and/or a beam for the downlink.

A multi-state structure for providing a wide display is applied to the electronic device like the UE. The multi-state structure may be a structure in which a resonance frequency of an antenna (hereinafter, referred to as an "antenna resonance frequency") can be physically shifted or changed, such as a slidable state, a foldable state, or a rollable state.

However, when a transmission path (or a transmission chain) for the reference signal is fixed, the radio link equality of the UE having the multi-state structure may deteriorate due to the reference signal according to an operation state of the UE (for example, up/down or open/closed).

Various embodiments of the disclosure may provide an apparatus for adaptively switching or changing the transmission path to transmit the reference signal in the electronic device having the multi-state structure and a method of controlling the same.

The technical solution to be solved by the disclosure is not limited to the above-mentioned technical solution, and other technical solutions can be predicted within a range that can be clearly understood by those skilled in the art to which various embodiments to be proposed herein belong.

### [Solution to Problem]

An electronic device having a multi-state structure in which an antenna resonance frequency can be physically shifted according to an embodiment of the disclosure is provided. The electronic device includes at least two antenna elements, each of which is configured to support a plurality of frequency bands, a radio frequency integrated circuit configured to down-convert a radio frequency signal into a baseband signal or up-convert the baseband signal into the radio frequency signal, a switching circuit configured to selectively connect the at least two antenna elements to the radio frequency integrated circuit, and at least one processor configured to process the baseband signal provided form the radio frequency integrated circuit or provide the baseband signal to the radio frequency integrated circuit, wherein at least one processor is configured to determine an antenna element to switch a first reference signal among the at least two antenna elements in consideration of an operation state of the electronic device according to the multi-state structure and control the switching circuit to transfer the first reference signal to the determined antenna element according to the determination.

A method of operating a transmission chain of a reference signal by an electronic device having a multi-structure state in which an antenna resonance frequency can be physically shifted according to an embodiment of the disclosure is provided. The method includes acquiring an operation state of the electronic device according to the multi-state structure, determining one antenna element to transmit a first reference signal among at least two antenna elements in consideration of the acquired operation state, and controlling a switching circuit to switch the first reference signal to the determined antenna element.

### [Advantageous Effects of Invention]

According to various embodiments of the disclosure, an electronic device having a multi-state structure can improve the performance of a radio link by dynamically replacing and/or changing a transmission path (or transmission chain) to transmit a reference signal in consideration of an operation state (for example, up/down, open/closed, EN-DC anchor band, or NR CA P-cell band).

Effects obtainable by the disclosure are not limited to the above-mentioned effects, and other effects can be predicted within a range that can be clearly understood by those skilled in the art to which various embodiments proposed herein belong.

### [Brief Description of Drawings]

FIG. 1 is a block diagram illustrating an electronic device 101 within a network environment according to various embodiments of the disclosure.
FIG. 2 is a block diagram illustrating a communication module 200 of the electronic device 101 supporting communication with a plurality of wireless networks according to various embodiments of the disclosure.
FIG. 3 illustrates an example of a wireless communication device 300 included in the electronic device 101 according to various embodiments of the disclosure.
FIG. 4A illustrates an operation state of the electronic device 101 having a slidable structure according to an embodiment of the disclosure.
FIG. 4B illustrates an operation state of the electronic device 101 having a rollable structure according to an embodiment of the disclosure.
FIG. 4C illustrates an operation state of the electronic device 101 having a two-stage foldable structure according to an embodiment of the disclosure.
FIG. 4D illustrates an operation state of the electronic device 101 having a three-stage foldable structure according to an embodiment of the disclosure.
FIG. 5 illustrates an example of a wireless communication device 500 included in the electronic device 101 according to an embodiment of the disclosure.
FIG. 6 illustrates a structure in which the electronic device 101 adaptively operates a transmission path of a reference signal according to an embodiment of the disclosure.
FIGs. 7A and 7B illustrate examples in which the electronic device 101 switches a transmission path of a reference signal in consideration of an operation state according to an embodiment of the disclosure.
FIG. 8 illustrates the control flow in which the electronic device 101 operates a transmission path of a reference signal according to an embodiment of the disclosure.
FIG. 9 illustrates the control flow in which the electronic device 101 operates the transmission path of the reference signal according to another embodiment of the disclosure.
FIG. 10 illustrates another example of the structure in which the electronic device 101 configures the transmission path of the reference signal according to an embodiment of the disclosure.
FIG. 11 illustrates another example of the structure in which the electronic device 101 configures the transmission path of the reference signal according to an embodiment of the disclosure.
FIG. 12 illustrates the control flow in which the electronic device 101 operates the transmission path of the reference signal according to another embodiment of the disclosure.
FIG. 13 illustrates the control flow in which the electronic device 101 operates the transmission path of the reference signal according to another embodiment of the disclosure.
FIGs. 14A and 14B illustrate influence between a transmission frequency of a reference signal and a signal of an ultra-high frequency band.

### [Mode for Carrying out the Invention]

Hereinafter, various embodiments to be proposed in the disclosure are described below in detail with reference to the accompanying drawings. However, for convenience of description, sizes of elements may be exaggerated or reduced in the drawings. For example, the size and the thickness of each element in the drawings are illustrated only for convenience of description and it should be noted that various embodiments to be proposed in the disclosure are not limited to the illustration.

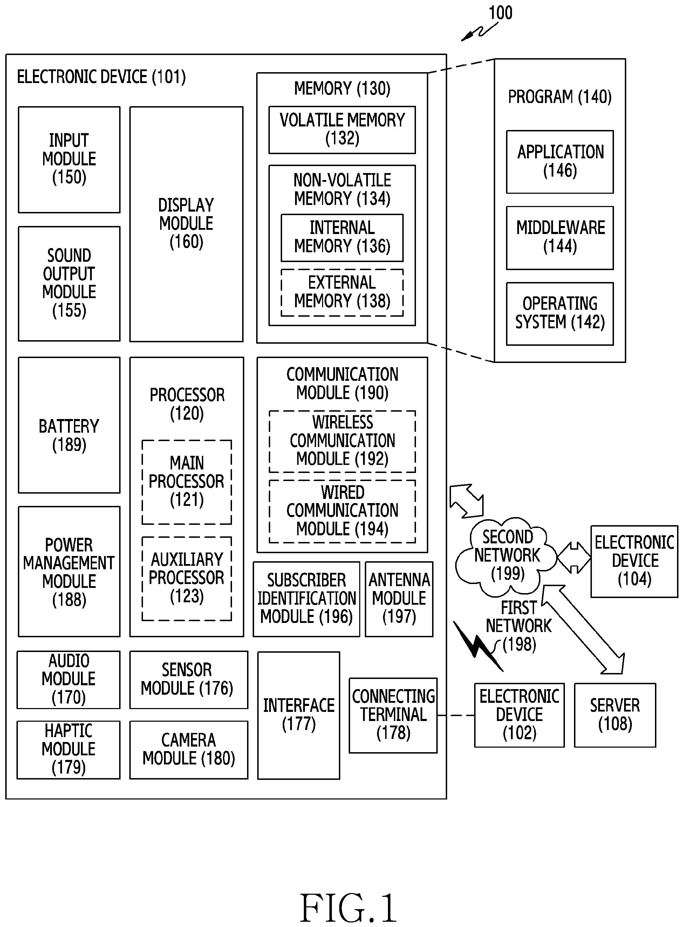

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

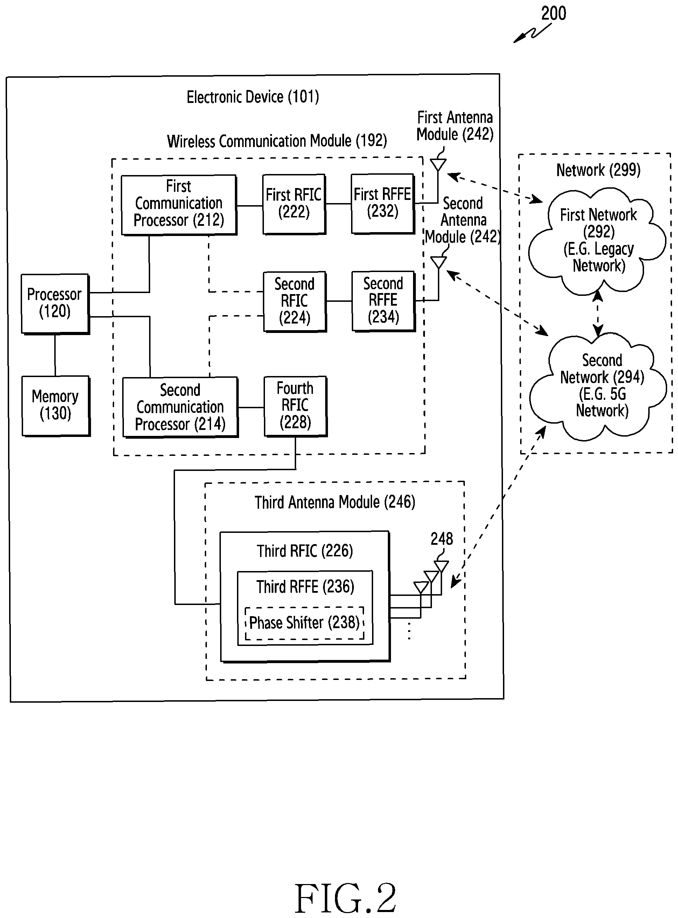

FIG. 2 is a block diagram illustrating a communication module 200 in the electronic device 101 for supporting communication with a plurality of wireless networks according to various embodiments.

Referring to FIG. 2, the electronic device 101 may include a first communication processor 212 (hereinafter, referred to as a first CP), a second communication processor 214 (hereinafter, referred to as a second CP), a first RFIC 222, a second RFIC 224, a third RFIC 226, a fourth RFIC 228, a first radio frequency front end (RFFE) 232, a second RFFE 234, a first antenna module 242, a second antenna module 244, and antennas 248. The electronic device 101 may further include the processor 120 and the memory 130. A second network 199 may include a first cellular network 292 and a second cellular network 294. According to another embodiment, the electronic device 101 may further include at least one element among the elements illustrated in FIG. 1, and the second network 199 may further include at least one other network. According to an embodiment, the first CP 212, the second CP 214, the first RFIC 222, the second RFIC 224, the fourth RFIC 228, the first RFFE 232, and the second RFFE 234 may configure at least a portion of the wireless communication module 192. According to another embodiment, the fourth RFIC 228 may be omitted or may be included as a portion of the third RFIC 226.

The first CP 212 may support establishment of a communication channel in a band to be used for wireless communication with the first cellular network 292 and legacy network communication through the established communication channel. According to various embodiments, the first cellular network 292 may be a legacy network including a second generation (2G), 3G, 4G, or long-term evolution (LTE) network. The second CP 214 may support establishment of a communication channel corresponding to a predetermined band (for example, about 6 GHz to about 60 GHz) among the bands to be used for wireless communication with the second cellular network 294 and support 5G network communication through the established communication channel. According to various embodiments, the second cellular network 294 may be a 5G network defined by the 3GPP. In addition, according to an embodiment, the first CP 212 or the second CP 214 may support establishment of a communication channel corresponding to another predetermined band (for example, equal to or lower than about 6 GHz) among the bands to be used for wireless communication with the second cellular network 294 and 5G network communication through the established communication channel. According to an embodiment, the first CP 212 and the second CP 214 may be implemented within a single chip or a single package. According to various embodiments, the first CP 212 or the second CP 214 may be configured within a single chip or a single package together with the processor 120, the auxiliary processor 123, or the communication module 190. According to an embodiment, the first CP 212 and the second CP 214 may be directly or indirectly connected to each other by an interface (not shown) and may provide or receive data or a control signal unidirectionally or bidirectionally.

In transmission, the first RFIC 222 may convert a baseband (BB) signal generated by the first CP 212 into a radio frequency (RF) signal in about 700 MHz to about 3 GHz used for the first cellular network 292 (for example, legacy network). In reception, the RF signal may be acquired from the first cellular network 292 (for example, legacy network) through an antenna (for example, the first antenna module 242) and may be preprocessed through the RFFE (for example, first RFFE 232). The first RFIC 222 may convert the preprocessed RF signal into a BB signal to be processed by the first CP 212.

In transmission, the second RFIC 224 may convert a BB signal generated by the first CP 212 or the second CP 214 into an RF signal (hereinafter, referred to as a 5G Sub6 RF signal) in a Sub6 band (for example, equal to or lower than about 6 GHz) used for the second cellular network 294 (for example, 5G network). In reception, a 5G Sub6 RF signal may be acquired from the second cellular network 294 (for example, 5G network) through an antenna (for example, the second antenna module 244) and may be preprocessed through the RFFE (for example, second RFFE 234). The second RFIC 224 may convert the preprocessed 5G Sub6 RF signal into a BB signal to be processed by the corresponding CP among the first CP 212 or the second CP 214.

In transmission, the third RFIC 226 may convert a BB signal generated by the second CP 214 into an RF signal (hereinafter, referred to as a 5G Above6 RF signal) in a 5G Above6 band (for example, from about 6 GHz to about 60 GHz) to be used for the second cellular network 294 (for example, the 5G network). In reception, the third RFIC 226 may preprocess the 5G Above6 RF signal acquired from the second cellular network 294 (for example, 5G network) through the antenna (for example, antenna 248) and convert the preprocessed 5G Above6 RF signal into a BB signal to be processed by the second CP 214. According to an embodiment, the third RFFE 236 may be configured as a portion of the third RFIC 226.

According to an embodiment, the electronic device 101 may include the fourth RFIC 228 separately from the third RFIC 226 or as at least a portion thereof. In this case, after converting the BB signal generated by the second CP 214 into an RF signal (hereinafter, referred to as an IF signal) in an intermediate frequency (IF) band (for example, about 9 GHz to about 11 GHz), the fourth RFIC 228 may transmit the IF signal to the third RFIC 226. The third RFIC 226 may convert the IF signal into a 5G Above6 RF signal. In reception, the 5G Above6 RF signal may be received from the second cellular network 294 (for example, 5G network) through the antenna (for example, antenna 248) and converted into an IF signal by the third RFIC 226. The fourth RFIC 228 may convert the IF signal into a BB signal to be processed by the second CP 214.

According to an embodiment, the first RFIC 222 and the second RFIC 224 may be implemented as at least a portion of a single chip or a single package. According to an embodiment, the first RFFE 232 and the second RFFE 234 may be implemented as at least a portion of a single chip or a single package. According to an embodiment, at least one of the first antenna module 242 or the second antenna module 244 may be omitted or may be combined with another antenna module to process RF signals in a plurality of corresponding frequency bands.

According to an embodiment, the third RFIC 226 and the antenna 248 may be disposed on the same substrate to configure a third antenna module 246. For example, the wireless communication module 192 or the processor 120 may be disposed on a first substrate (for example, a main PCB or a first printed circuit board). In this case, the third RFIC 226 may be disposed in a partial area (for example, bottom side) of a second substrate (for example, a sub PCB or a second printed circuit board) separated from the first substrate and the antennas 248 may be disposed in another partial area (for example, top side) to configure the third antenna module 246. By placing the third RFIC 226 and the antennas 248 on the same substrate, it is possible to reduce the length of a transmission line therebetween. This is to reduce loss (for example, attenuation) of the signal in a high frequency band (for example, about 6 GHz to about 60 GHz) used for, for example, 5G network communication due to the transmission line. Accordingly, the electronic device 101 may improve a quality or speed of communication with the second cellular network 294 (for example, a 5G network). According to an embodiment, the included third RFFE 236 may be separated from the third RFIC 226 and configured as a separate chip. For example, the third antenna module 246 may include the third RFFE 236 and the antennas 248 on the second substrate. For example, the third RFIC 226 from which the third RFFE 236 is separated in the third antenna module 246 may or may not be disposed on the second substrate.

According to an embodiment, the antennas 248 may be configured as an antenna array including a plurality of antenna elements which can be used for beamforming. In this case, the third RFIC 226 may include, for example, a plurality of phase shifters 238 corresponding to the plurality of antenna elements as a part of the third RFFE 236. In transmission, each of the plurality of phase shifters 238 may convert a phase of the 5G Above6 RF signal to be transmitted to the outside of the electronic device 101 (for example, a base station of the 5G network) through a corresponding antenna element. In reception, the plurality of phase shifters 238 may convert the phase of the 5G Above6 RF signal received from the outside through the corresponding antenna element into the same phase or substantially the same phase. This enables transmission or reception through beamforming between the electronic device 101 and the outside.

According to an embodiment, the third antenna module 246 may up-convert the transmission signal of the baseband provided by the second communication processor 214. The third antenna module 246 may transmit the RF transmission signal generated by up conversion through at least two transmission and reception antenna elements among the plurality of antenna elements 248. The third antenna module 246 may receive the RF reception signal through at least two transmission and reception antenna elements and at least two reception antenna elements among the plurality of antenna elements 248. The third antenna module 246 may down-convert the RF reception signal and generate the reception signal of the baseband. The third antenna module 246 may output the reception signal of the baseband generated by down-conversion to the second communication processor 214. The third antenna module 246 may include at least two transmission and reception circuits corresponding to at least two transmission and reception antenna elements in one-to-one correspondence and at least two reception circuits corresponding to at least two reception antenna elements in one-to-one correspondence.

The second cellular network 294 (for example, 5G network) may operate independently from the first cellular network 292 (for example, legacy network) (for example, stand-alone (SA)) or operate through a connection thereto (for example, non-stand alone (NSA)). For example, in the 5G network, only an access network (for example, a 5G radio access network (RAN) or a next generation RAN (NG RAN)) may exist without a core network (for example, a next generation core (NGC)). In this case, the electronic device 101 may access the access network of the 5G network and then access an external network (for example, Internet) under the control of the core network (for example, evolved packed core (EPC) of the legacy network). Protocol information (for example, LTE protocol information) for communication with the legacy network and protocol information (for example, new radio (NR) protocol information) for communication with the 5G network may be stored in the memory 230 and may be accessed by another element (for example, the processor 120, the first CP 212, or the second CP 214).

According to various embodiments, the processor 120 of the electronic device 101 may execute one or more instructions stored in the memory 130. The processor 120 may include at least one of a circuit for processing data, for example, an integrated circuit (IC), an arithmetic logic unit (ALU), a field programmable gate array (FPGA), and a large scale integration (LSI). The memory 130 may store data related to the electronic device 101. The memory 130 may include a volatile memory such as a random access memory (RAM) including a static random access memory (SRAM) or a dynamic RAM (DRAM) or a nonvolatile memory such as a read only memory (ROM), a magneto-resistive RAM (MRAM), a spin-transfer torque (STT)-MRAM, a phase-change RAM (PRAM), a resistive RAM (RRAM), a ferroelectric RAM (FeRAM), a flash memory, an embedded multimedia card (eMMC), and a solid state drive (SSD).

According to various embodiments, the memory 130 may store instructions related to applications and instructions related to an operating system (OS). The operating system is system software executed by the processor 120. The processor 120 may manage hardware components included in the electronic device 101 by executing the operating system. The operating system is an application that is the remaining software except for the system software and may provide an application programming interface (API).

According to various embodiments, one or more applications which are sets of a plurality of instructions may be installed within the memory 130. The installation of the application in the memory 130 may mean that the application is stored in a format which can be executed by the processor 120 connected to the memory 130.

According to various embodiments of the disclosure, an electronic device (for example, the electronic device 101 of FIG. 1) may include a radio frequency (RF) module having a structure (1T4R) providing one transmission path (or transmission chain) and four reception paths (for example, reception chains) in a 5G communication system. The RF module included in the electronic device 101 may perform an operation of transmitting and receiving a signal by using, for example, FR1. In the following description, the RF module may be referred to as a wireless communication module, a wireless communication device, or an antenna module. Further, for convenience of description, various embodiments below are based on the electronic device 101 including the RF module having the 1T4R structure. However, various embodiments of the disclosure are not restrictively applied only to the electronic device 101 including the RF module having the 1T4R structure, but the structure of the RF module may be easily changed by those skilled in the art in consideration of a type of a switch for transferring a reference signal to at least one of a plurality of antennas.

According to an embodiment, when the type of the switch for switching a reference signal is 1T4R, the electronic device 101 may output SRS symbols to be transmitted in a time slot of a subframe including resource blocks (RBs) for a random access channel (RACH), a physical uplink shared channel (PUSCH), and a physical uplink control channel (PUCCH). This may improve downlink throughput (T-put) of the electronic device 101.

According to an embodiment, when the electronic device 101 having the type of the switch for switching the SRS corresponding to 1T4R transmits and receives a signal, based on a time division duplex (TDD) scheme by using FR1, four paths to output the SRS symbols may be a first basic reception path (PRX1), a second basic reception path (PRX2), a first diversity reception path (DRX1), and a second diversity reception path (DRX2). The first basic reception path (PRX1) may be a basic reception path (PRX) for receiving a basic data reception signal, the second basic reception path (PRX2) may be a basic reception path (PRXMIMO) for receiving a basic data reception signal for supporting MIMO, the first diversity reception path (DRX1) may be a diversity reception path (DRX) for receiving a diversity data reception signal, and the second diversity reception path (DRX2) may be a diversity reception path (DRXMIMO) for receiving a diversity data reception signal for supporting MIMO.

According to an embodiment, an operating band in a first NR frequency band (FR1, sub-6, or 410 MHz to 6 GHz) which is one of NR frequency bands to be used to transmit and receive the signal by the electronic device 101 may be defined as shown in [Table 1] below.

**[Table 1]**

| ▪ **NR operating band** | **Uplink (UL) operating band BS receive / UE transmit** F_{UL_low} - F_{UL_high} | **Downlink (DL) operating band BS transmit / UE receive** F_{DL_low} - F_{DL_high} | **Duplex Mode** |
|---|---|---|---|
| ▪ n1 | 1920 MHz - 1980 MHz | 2110 MHz - 2170 MHz | FDD |
| ▪ n2 | 1850 MHz - 1910 MHz | 1930 MHz - 1990 MHz | FDD |
| ▪ n3 | 1710 MHz - 1785 MHz | 1805 MHz - 1880 MHz | FDD |
| ▪ n5 | 824 MHz - 849 MHz | 869 MHz - 894 MHz | FDD |
| ▪ n7 | 2500 MHz - 2570 MHz | 2620 MHz - 2690 MHz | FDD |
| ▪ n8 | 880 MHz - 915 MHz | 925 MHz - 960 MHz | FDD |
| ▪ n12 | 699 MHz - 716 MHz | 729 MHz - 746 MHz | FDD |
| ▪ n20 | 832 MHz - 862 MHz | 791 MHz - 821 MHz | FDD |
| ▪ n25 | 1850 MHz - 1915 MHz | 1930 MHz - 1995 MHz | FDD |
| ▪ n28 | 703 MHz - 748 MHz | 758 MHz - 803 MHz | FDD |
| ▪ n34 | 2010 MHz - 2025 MHz | 2010 MHz - 2025 MHz | TDD |
| ▪ n38 | 2570 MHz - 2620 MHz | 2570 MHz - 2620 MHz | TDD |
| ▪ n39 | 1880 MHz - 1920 MHz | 1880 MHz - 1920 MHz | TDD |
| ▪ n40 | 2300 MHz - 2400 MHz | 2300 MHz - 2400 MHz | TDD |
| ▪ n41 | 2496 MHz - 2690 MHz | 2496 MHz - 2690 MHz | TDD |
| ▪ n51 | 1427 MHz - 1432 MHz | 1427 MHz - 1432 MHz | TDD |
| ▪ n66 | 1710 MHz - 1780 MHz | 2110 MHz-2200 MHz | FDD |
| ▪ n70 | 1695 MHz - 1710 MHz | 1995 MHz-2020 MHz | FDD |
| ▪ n71 | 663 MHz - 698 MHz | 617 MHz - 652 MHz | FDD |
| ▪ n75 | N/A | 1432 MHz - 1517 MHz | SDL |
| ▪ n76 | N/A | 1427 MHz - 1432 MHz | SDL |
| ▪ n77 | 3300 MHz - 4200 MHz | 3300 MHz - 4200 MHz | TDD |
| ▪ n78 | 3300 MHz - 3800 MHz | 3300 MHz - 3800 MHz | TDD |
| ▪ n79 | 4400 MHz - 5000 MHz | 4400 MHz - 5000 MHz | TDD |
| ▪ n80 | 1710 MHz - 1785 MHz | N/A | SUL |
| ▪ n81 | 880 MHz - 915 MHz | N/A | SUL |
| ▪ n82 | 832 MHz - 862 MHz | N/A | SUL |
| ▪ n83 | 703 MHz - 748 MHz | N/A | SUL |
| ▪ n84 | 1920 MHz - 1980 MHz | N/A | SUL |
| ▪ n86 | 1710 MHz - 1780 MHz | N/A | SUL |

In [Table 1], n34, n38, n39, n40, n41, n51, n77, n78, and n79 which are UL operating bands and DL operating bands according to the TDD scheme are expressed in red color. The reference signal according to various embodiments to be proposed in the disclosure may be transmitted using, for example, UL operating bands in n34, n38, n39, n40, n41, n51, n77, n78, and n79 which are operating bands expressed in red color in [Table 1].

According to an embodiment, the switch (for example, a switch in the type of 1T4R) included in the RF module of the electronic device 101 may not only switch a path for transmitting a reference signal (for example, an SRS) and receiving a downlink signal but also perform switching for transmitting the reference signal to at least one of the four antennas.

According to an embodiment, the electronic device 101 to which a wireless transmission/reception function supporting an ultra-high frequency band, such as an ultra-wide band (UWB), is added may be configured to share a transmission path and an antenna for a reference signal (SRS). The electronic device 101 may have unfixed transmission paths of the reference signal (SRS) for sharing a plurality of antennas and the transmission paths may be adaptively changed or exchanged as necessary. According to an embodiment, the electronic device 101 having a multi-state structure, such as a slidable structure, a foldable structure, or a rollable structure, may change a transmission path of the reference signal according to operation states separated into up/down or open/closed, thereby shifting or changing a resonance frequency of the antenna to transmit the reference signal. The operation states may not be defined only as two stages such as up/down or open/closed. For example, in the slidable structure or the rollable structure, an intermediate state of the up state and the downlink state, that is, a state in which only parts are up or down, such as 1/3, 1/2, or 2/3, may be included in the operation states. In another example, in the foldable structure, an intermediate state of the open state (for example, a completely unfolded state) and the closed state (for example, a completely folded state), that is, a state in which only parts are folded (or a state in which only parts are unfolded), such as 60 degrees, 90 degrees, or 120 degrees, may be included in the operation states. The operation states which can be added as described above may be considered to change the transmission path of the reference signal. Accordingly, in this case, the resonance frequency of the antenna to transmit the reference may be shifted or changed. The reference signal may support a single band or multiple bands. For example, when the reference signal supports a single band, the electronic device 101 may change the transmission path of the reference signal in consideration of the operation state. In another example, when the reference signal supports multiple bands, the electronic device 101 may exchange the transmission path of the reference signal for each frequency band (for example, about 2.6 GHz or about 3.8 GHz).

As described above, peripheral metal parts and peripheral properties of the electronic device 101 having a multi-state structure, such as a slidable structure, a foldable structure, or a rollable structure, may be changed according to the operation state (for example, up/down or open/closed). In the electronic device 101, performance deterioration may be generated by a shift of the resonance frequency of the antenna or a change in a ground condition due to a change in the peripheral metal parts and the peripheral properties. In various embodiments to be proposed in the disclosure, the electronic device 101 can prevent performance deterioration due to a change in the peripheral metal parts and the peripheral properties according to the operation of the transmission path of the reference signal considering an operation state due to the multi-state structure. According to an embodiment, the electronic device 101 may operate the transmission path of the reference signal to reduce loss in an RF path for electrically connecting the antenna and an RFIC or reduce gain delta of each antenna.

According to an embodiment, the electronic device 101 supporting an NSA mode based on a dual connectivity (for example, E-TURAN new radio dual connectivity (ENDC)) technology may operate (for example, maintain, exchange, or change) a first path for a first signal in a first frequency band (for example, an LTE support anchor band) and a second path for a second signal (for example, the SRS) in a second frequency band (for example, FR1 or Sub-6), so that the first path and the second path may be simultaneously shared to not open (for example, short-circuit) the two signals. The ENDC may be a technology for increasing a data transmission speed by using all of communication in a first communication network (for example, an LTE network) using the first frequency band (for example, the LTE support anchor band) and communication in a second communication network (for example, a 5G or NR network) using the second frequency band (for example, FR1 or Sub-6). For example, when transmitting the SRS, the electronic device 101 supporting the ENDC may change the path (LTE path) for an LTE signal from a main path (for example, a path for supporting frequencies from 1.7 GHz to 3 GHz) to a sub path (for example, a path for supporting frequencies below 0.9 GHz). The electronic device 101 supporting the ENDC may transmit the SRS through the main path (a path for supporting frequencies from 1.7 GHz to 3 GHz) having used the LTE path before the change. When changing the LTE path due to, for example, an operation state, the electronic device 101 having the multi-state structure may predict even the generation of call drop and/or mute that may deteriorate the quality of LTE communication and switch (for example, exchange or change) the transmission path of the reference signal.

According to an embodiment, even though carrier aggregation (CA) (for example, n7 and n41 in [Table 1]) is supported, the electronic device 101 supporting the SA mode may change the LTE path from the main path (for example, a path for supporting frequencies from 1.7 GHz to 3 GHz) to the sub path (for example, the path for supporting frequencies below 0.9 GHz) and transmit the SRS in the main path (for example, the path for supporting frequencies from 1.7 GHz to 3 GHz).

According to an embodiment, when transmitting the reference signal, the electronic device 101 capable of sharing the path of the reference signal (for example, the SRS) in a predetermined frequency band (for example, n41, n77, and n78 in Sub-6) with the UWB may exchange or change the path for the UWB. In this case, when configuring the circuit for switching the SRS, the electronic device 101 supporting 1T4R may minimize a noise effect by changing the transmission path in which the SRS having reference power or more (for example, 20 dBm or more, waveform DFTs, or CP-OFDM) can influence second and third harmonics and spurious (for example, the UWB band). The spurious is a frequency component (spurious) detected outside the frequency band targeted by the electronic device and may be generated by a harmonic or subharmonic component of a carrier, a high-order component of a side band of a modulated wave, and parasitic oscillation.

According to an embodiment, the electronic device 101 may operate the transmission path of the reference signal in consideration of requirements, such as open/closed, up/down, an EN-DC anchor band, or an NR CA Pcell band according to an event in the electronic device 101. In this case, the electronic device 101 may check the requirements according to the event in the electronic device 101 and transmit the reference signal (for example, the SRS) through the optimized transmission path, based on the result.

According to an embodiment, the antenna may include various types of antenna structures. For example, the antenna may include a patch antenna, a dipole antenna, a monopole antenna, a slot antenna, a loop antenna, an inverted-F antenna, a planar inverted-F antenna, and/or an antenna structure obtained by combining two or more thereof. For example, a radiator of the antenna may include a part of the housing of the electronic device. The part of the housing used as the radiator of the antenna may include a conductive segment electrically separated by a non-conductive member.

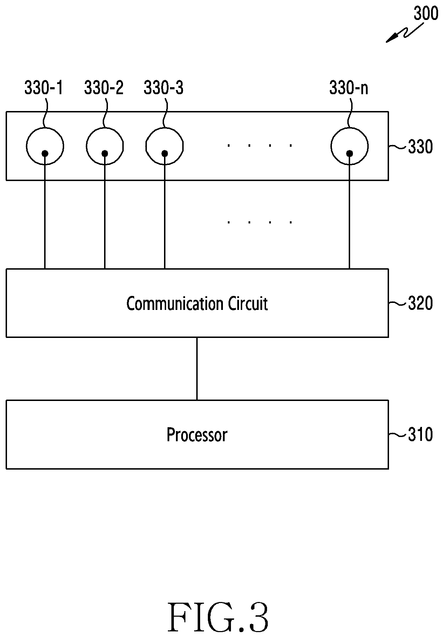

FIG. 3 illustrates an example of a wireless communication device 300 included in an electronic device (for example, the electronic device 101 of FIG. 1) according to various embodiments of the disclosure.

Referring to FIG. 3, the wireless communication device 300 according to an embodiment may include at least one processor 310 (for example, the processor 120 of FIG. 1, or the application processor and/or the communication processor), a communication circuit 320, and an antenna structure 330. The wireless communication device 300 may include a first PCB and a second PCB. The processor 310 may be located on the first PCB. All or some of elements of an antenna module (for example, the third antenna module 246 of FIG. 2) may be located on the second PCB. The antenna module may include, for example, the communication circuit 320 and the antenna structure 330. In this case, some of the elements of the communication circuit 320 included in the antenna module may be included together with the processor 310 in the first PCB, and the remaining elements may be included together with the antenna structure 330 in the second PCB.

According to an embodiment, the wireless communication device 300 may determine a transmission path of a reference signal for a single band or for each multi-band in consideration of an operation state of the electronic device 101 having a multi-state structure and configure a transmission path to transmit the reference signal according to the determination. The multi-state structure may be a structure that can be transformed, for example, a slidable structure, a rollable structure, or a foldable structure. The operation state may be defined according to the multi-state structure of the electronic device 101. The operation state in the slidable structure may be one of an up state and a down state, the operation state in the rollable structure may be one of the up state and the down state, and the operation state in the foldable structure may be one of an open state and a closed state.

According to an embodiment, the communication circuit 320 may electrically connect the processor 310 and the antenna structure 330. The communication circuit 320 may be located within one chip package or located over a plurality of chip packages. At least a part of the communication circuit 320 may be located on the second PCB on which the antenna structure 330 is located or located on the first PCB on which the processor 310 is located. The communication circuit 320 may include at least one of, for example, RFICs (for example, the first, second, third, and fourth RFICs 222, 224, 226, and 228 of FIG. 2), an IFIC, a combiner, a distributer, a phase shifter, a PLL, or a mixer.

According to an embodiment, the communication circuit 320 may have a structure (for example, 1T4R) including at least one transmission/reception circuit and a plurality of reception circuits. The at least one transmission/reception circuit may configure, for example, a transmission path (or a transmission chain) for transmitting a wireless signal or configure a reception path (or a reception chain) for receiving a wireless signal. The plurality of reception circuits may configure, for example, a reception path (or a reception chain) for receiving a wireless signal.

According to an embodiment, the communication circuit 320 may configure a circuit to change or select a transmission path of the reference signal appropriately according to an event of the electronic device 101 having the multi-state structure. The communication circuit 320 may configure, for example, the circuit to make the transmission path of the reference signal for each frequency band share the circuit configuration of double pole 4 throw (DP4T), 3 pole 6 throw (3P6T), and double pole double throw (DPDT) and antennas.

According to an embodiment, the communication circuit 320 may include a radio frequency module (RF module) having a structure (1T4R) for providing one transmission path (or transmission chain) and four reception paths (for example, reception chains). The communication circuit 320 may perform an operation of transmitting and receiving a signal by using, for example, FR1. The communication circuit 320 may output an SRS to be transmitted in a predetermined time slot of a subframe through four paths.

According to an embodiment, when the communication circuit 320 including a 1T4R type switch transmits and receives a signal using FR1, based on the TDD scheme in order to operate transmission paths of the SRS, the communication circuit 320 may not only switch a path for transmitting the reference signal (for example, the SRS) and receiving the downlink signal but also perform switching for transmitting the reference signal to at least one of the four antennas. The communication circuit 320 may apply different switch types according to the number of supported frequency bands. The 1T4R type may be applied when the communication circuit 320 supports two frequency bands. A 3P6T type multi-input multi-output switch may be applied when the communication circuit 320 supports three frequency bands, and a 4P8T multi-input multi-output switch may be applied when the communication circuit 320 supports four frequency bands.

According to an embodiment, when the electronic device 101 supports the dual connectivity (for example, E-TURAN new radio dual connectivity (ENDC)) technology in the NSA mode, the communication circuit 320 may operate (for example, maintain, exchange, or change) a first path for a first signal in a first frequency band (for example, an LTE support anchor band) and a second path for a second signal (for example, the SRS) in a second frequency band (for example, FR1 or Sub-6). In this case, the communication circuit 320 may allow the first path and the second path to be simultaneously shared in order to not open (for example, short-circuit) two signals. When transmitting, for example, the SRS, the communication circuit 320 may change the path for the LTE signal from a main path (for example, a path for supporting frequencies from 1.7 GHz to 3 GHz) to a sub path (for example, a path for supporting frequencies below 0.9 GHz).

According to an embodiment, when the electronic device 101 supports CA in the SA mode, the communication circuit 320 may change the path for the LTE signal from the main path (for example, the path for supporting frequencies from 1.7 GHz to 3 GHz) to the sub path (for example, the path for supporting frequencies below 0.9 GHz) and transmit the SRS in the main path (for example, the path for supporting frequencies from 1.7 GHz to 3 GHz).

According to an embodiment, when the electronic device 101 may share paths of the reference signal (for example, the SRS) in a UWB and a predetermined frequency band (for example, n41, n77, and n78 in Sub-6), the communication circuit 320 may exchange or change the path for the UWB. In this case, when configuring a circuit for switching the transmission path of the SRS, the communication circuit 320 supporting 1T4R may minimize a noise effect by changing the transmission path in which the SRS having reference power or more (for example, 20 dBm or more, waveform DFTs, or CP-OFDM) can influence second and third harmonics and spurious (for example, a UWB band).

According to an embodiment, the communication circuit 320 may operate the transmission path of the reference signal in consideration of requirements, such as open/closed, up/down, an EN-DC anchor band, or an NR CA Pcell band according to an event in the electronic device 101. In this case, the communication circuit 320 may check the requirements according to the event in the electronic device 101 and transmit the reference signal (for example, the SRS) through an optimal transmission path, based on the result.

According to an embodiment, the antenna structure 330 may include a plurality of antenna elements 330-1, 330-2, 330-3.......330-n. The plurality of antenna elements 330-1, 330-2, 330-3.......330-n included in the antenna structure 330 may transmit an RF signal from the communication circuit 320 through a radio channel or transfer an RF signal received through a radio channel to the communication circuit 320. Reception chains or transmission chains electrically connected to the plurality of antenna elements 330-1, 330-2, 330-3.......330-n may be determined by the communication circuit 320 in consideration of the operation state of the electronic device 101. At least one of the plurality of antenna elements 330-1, 330-2, 330-3.......330-n may be used as antennas for transmission and reception and at least two other elements may be used as reception-dedicated antennas. The reception-dedicated antenna may be used only for receiving a downlink signal but also for transmitting a reference signal. A resonance frequency may be shifted according to transmission chains or reception chains to be electrically connected to the plurality of antenna elements 330-1, 330-2, 330-3.......330-n. The plurality of antenna elements 330-1, 330-2, 330-3.......330-n may be configured to be suitable for, for example, a supported frequency. Frequencies supported by the plurality of antenna elements 330-1, 330-2, 330-3.......330-n may be the same as or different from each other.

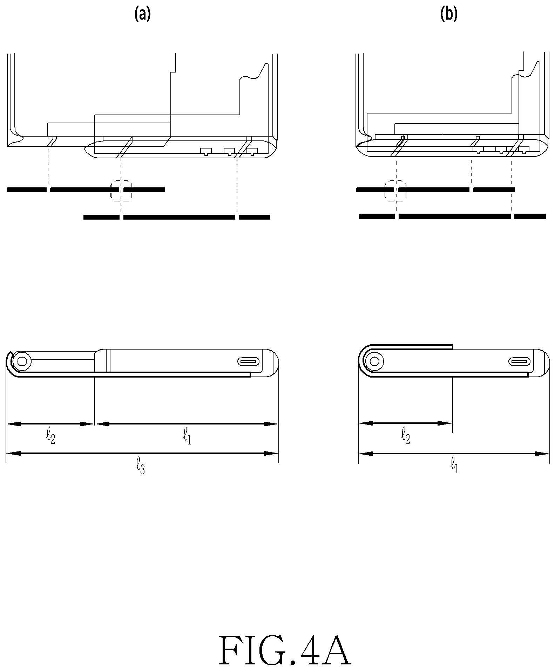

FIG. 4A illustrates an operation state of an electronic device (for example, the electronic device 101 of FIG. 1) having a slidable structure according to an embodiment of the disclosure.

Referring to FIG. 4A, the operation state of the electronic device 101 having a slidable structure according to an embodiment may be one of an up state (a) and a down state (b). The up state (a) may correspond to an operation state in which the electronic device 101 expands in a horizontal direction, and the down state (b) may correspond to an operation state in which the electronic device 101 does not expand in the horizontal direction. In the up state (a), for example, a total horizontal length may become 13 since an expansion length 12 increases from a length 11 in the down state (b) which is a previous state. In the down state (b), for example, a total horizontal length 11 may become 11 since an expansion length 12 decreases from a length 13 in the up state (s) which is a previous state.

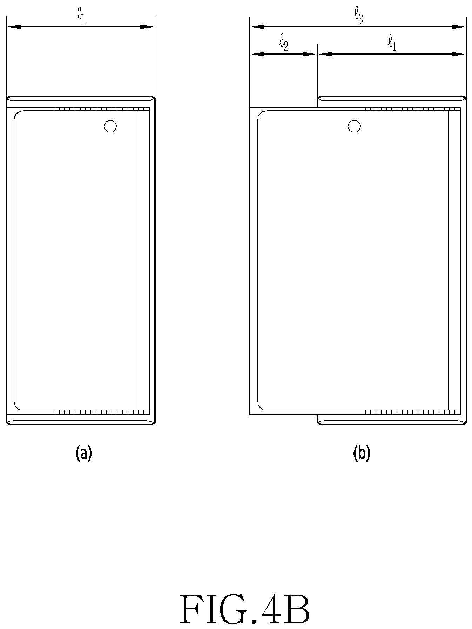

FIG. 4B illustrates an operation state of an electronic device (for example, the electronic device 101 of FIG. 1) having a rollable structure according to an embodiment of the disclosure.

Referring to FIG. 4B, the operation state of the electronic device 101 having the rollable structure according to an embodiment may be one of a down state (a) and an up state (b). The down state (s) may correspond to an operation state in which the electronic device 101 does not expand in a horizontal direction, and the up state (b) may correspond to an operation state in which the electronic device 101 expands in the horizontal direction. In the down state (a), for example, a total horizontal length 11 may become 11 since an expansion length 12 decreases from a length 13 in the up state (b) which is a previous state. In the up state (b), for example, a total horizontal length may become 13 since an expansion length 12 increases from a length 11 in the down state (a) which is a previous state.

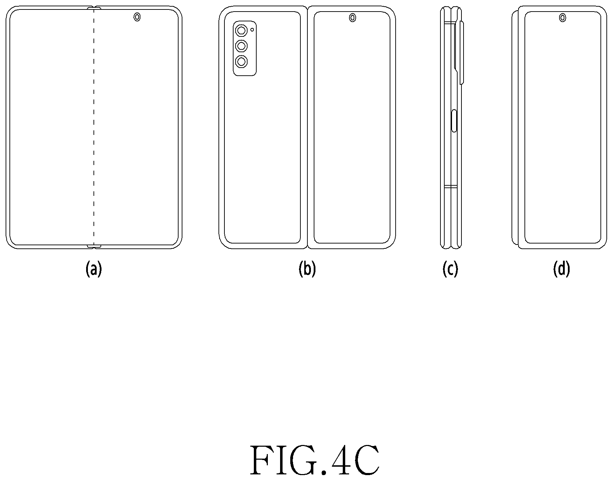

FIG. 4C illustrates an operation state of an electronic device (for example, the electronic device 101 of FIG. 1) having a two-stage foldable structure according to an embodiment of the disclosure.

Referring to FIG. 4C, the operation state of the electronic device 101 having a two-stage foldable structure may be one of open states (a and b) and closed states (c and d) according to an embodiment. The open state (a or b) may correspond to an operation state in which the electronic device 101 expands in a horizontal direction, and the closed state (c or d) may correspond to an operation state in which the electronic device 101 does not expand in a horizontal direction. In the open state (a or b), for example, a total horizontal length may increase approximately double from a length in the closed state (c or d) that is a previous state. In the closed state (c or d), for example, a total horizontal length may decrease approximately half the length in the open state (a or b) that is a previous state.

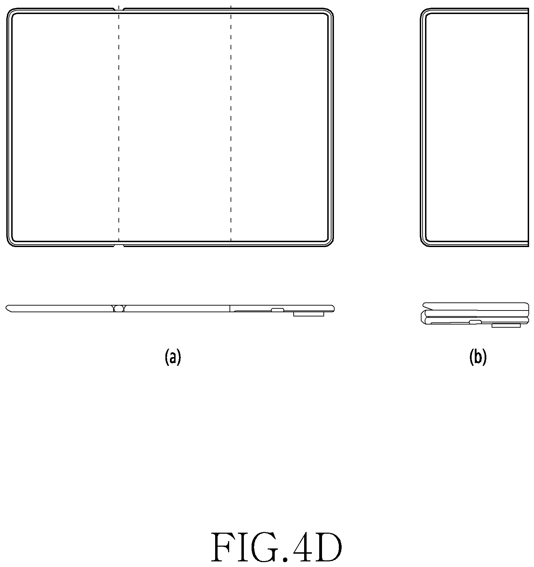

FIG. 4D illustrates operation states of an electronic device (for example, the electronic device 101 of FIG. 1) having a three-stage foldable structure according to an embodiment of the disclosure.

Referring to FIG. 4D, the operation state of the electronic device 101 having a three-stage foldable structure may be one of an open state (a) and a closed state (b) according to an embodiment. The open state (a) may correspond to an operation state in which the electronic device 101 expands in a horizontal direction, and the closed state (b) may correspond to an operation state in which the electronic device 101 does not expand in a horizontal direction. In the open state (a), for example, a total horizontal length may increase triple from a length in the closed state (b) that is a previous state. In the closed state (b), for example, a total horizontal length may decrease by one third of a length in the open state (a) that is a previous state.

As described above, since a resonance frequency of the antenna may be physically shifted or has different impedance due to a change in peripheral metal parts and peripheral properties of the electronic device 101 according to operation states separated into an up state (or open state) and/or a down state (or closed state), the electronic device 101 having the multi-state structure, such as the slidable structure, the rollable structure, the two-stage foldable structure, and the three-stage foldable structure, needs to operate the transmission path of the reference signal to transmit a reference signal (for example, an SRS) through an optimal transmission path in consideration thereof.

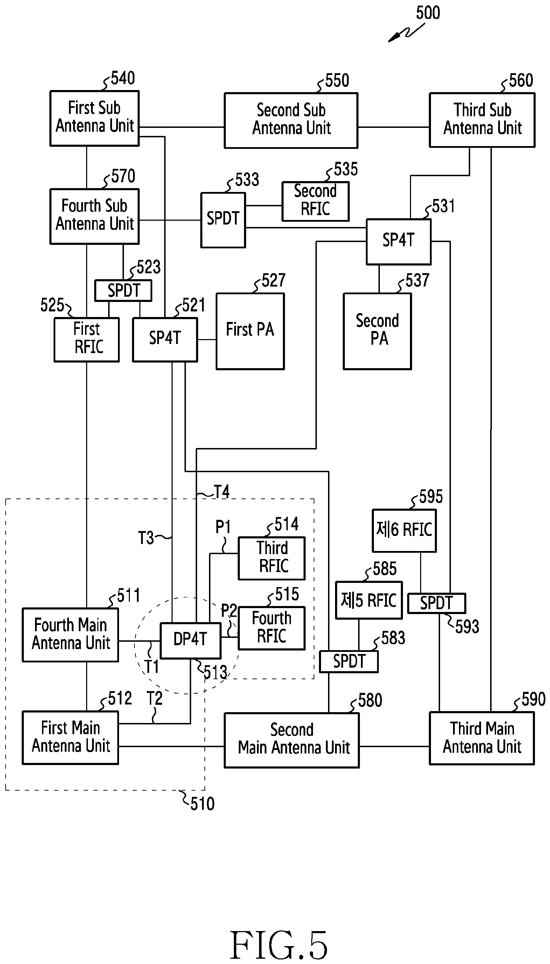

FIG. 5 illustrates a configuration of a wireless communication device 500 (for example, the wireless communication device 300 of FIG. 3) included in an electronic device (for example, the electronic device 101 of FIG. 1) according to an embodiment of the disclosure.

Referring to FIG. 5, the wireless communication device 500 according to an embodiment may include a plurality of sub antenna units 540, 550, 560, and 570, a plurality of main antenna units 512, 580, 590, and 511, a plurality of first type (for example, single pole double throw (SPDT)) switches 523, 533, 583, and 593, a plurality of second types (for example, single pole four throw (SP4T) switches 521 and 531, at least one third type (for example, double pole four throw (DP4T)) switch 513, a plurality of RFICs 525, 535, 514, 515, 585, and 595, and/or a plurality of PAs 527 and 537.

According to an embodiment, a path operation device 510 included in the wireless communication device 300 and operating a transmission path of the reference signal in consideration of an operation state of the electronic device 101 may include a third type (for example, DP4T) switch 513, third and fourth RFICs 514 and 515, or first and fourth main antenna units 511 and 512. The third type switch 513 may have, for example, a structure of switching two input terminals to four output terminals. The two input terminals included in the third type switch 513 may include a first input terminal electrically connected (P1) to the third RFIC 514 and a second input terminal electrically connected (P2) to the fourth RFIC 515. The four output terminals included in the third type switch 513 may include a first output terminal electrically connected (T1) to the fourth main antenna unit 511, a second output terminal electrically connected (T2) to the first main antenna unit 512, a third output terminal electrically connected (T3) to the second type switch 521 which is one of the plurality of second type switches 521 and 531, and a fourth output terminal electrically connected (T4) to the second type switch 531 which is one of the plurality of second type switches 521 and 531. The third type switch 513 may select at least one of the plurality of connections (T1 to T4) as the transmission path of the SRS according to, for example, the operation state of the electronic device 101. T3 that is the electrical connection to the second type switch 521 which is one of the plurality of second type switches 521 and 531 may be used as a path for transferring an RF signal output by the first PA 527 to the third type switch 513 through the second type switch 521. T4 that is the electrical connection to the second type switch 531 which is one of the plurality of second type switches 521 and 531 may be used as a path for transferring an RF signal output by the second PA 537 to the third type switch 513 through the second type switch 531.

According to an embodiment, the third type switch 513 may transfer a reference signal input into at least one input terminal among the two input terminals to at least one output terminal among the four output terminals in consideration of the operation state of the electronic device 101. When the operation state of the electronic device 101 is a first operation state (for example, the closed state or the down state), the third type switch 513 may transfer a first reference signal of a first frequency band (for example, about 3.8 GHz) provided from the third RFIC 514 through the connection P1 to the fourth main antenna unit 511 through the connection T1 and transfer a second reference signal of a second frequency band (for example, about 2.6 GHz) provided through the connection P2 from the fourth RFIC 515 to the first main antenna unit 512 through the connection T2. When the operation state of the electronic device 101 is a second operation state (for example, the open state or the up state), the third type switch 513 may transfer a first reference signal of a first frequency band (for example, about 3.8 GHz) provided from the third RFIC 514 through the connection P1 to the first main antenna unit 512 through the connection T2 and transfer a second reference signal of a second frequency band (for example, about 2.6 GHz) provided from the fourth RFIC 515 through the connection P2 to the four main antenna unit 511 through the connection T1.

According to various embodiments, the third type switch 513 may perform a switching operation for configuring reception paths of one or a plurality of RF reception signals and transmission paths of at least one reference signal. The third type switch 513 may use a switch having a multi-input multi-output structure to exchange, change, or select a transmission path of a reference signal for each event so as to share antenna elements. The structure having the multi-input multi-output structure may be, for example, a switch in a DP4T type (hereinafter, referred to as a `DP4T switch'). In this case, the DP4T switch may include two pole terminals and four throw terminals. A first reference signal (P1) and a second reference signal (P2) may be input into the two pole terminals included in the DP4T switch. The four throw terminals included in the DP4T may be electrically connected to the plurality of main antenna units 511 and 512. Among the four throw terminals, for example, one throw terminal (for example, a first throw terminal) may be electrically connected to the fourth main antenna unit 511 and another throw terminal (for example, a second throw terminal) may be electrically connected to the first main antenna unit 512.

According to an embodiment, the type of the third type switch 513 may be determined according to the number of supported frequency bands. For example, the third type switch 513 may be a 3P6T type when the wireless communication device 300 supports three frequency bands, and the third type switch 513 may be a 4P8T type when the wireless communication device 300 supports four frequency bands.

According to an embodiment, when the third type switch 513 is a DP4T switch, a first reference signal (P1) of a first frequency band (for example, a band X) input into a first pole terminal which is one of the two pole terminals may switch to a transmission signal (T1) of the fourth main antenna unit 511 through the first throw terminal or switch to a transmission signal (T2) of the first main antenna unit 512 through the second throw terminal. Further, when the third type switch 513 is a DP4T switch, a second reference signal (P2) of a second frequency band (for example, a band Y) input into a second pole terminal which is one of the two pole terminals may switch to a transmission signal (T1) of the fourth main antenna unit 511 through the first throw terminal or switch to a transmission signal (T2) of the first main antenna unit 512 through the second throw terminal.

The third type switch 513 which can operate as described above may maintain, exchange, or change the transmission paths for transferring the reference signals input into the two pole terminals to the plurality of antenna units 511 and 512. The third type switch 513 may consider the operation state of the electronic device (for example, the electronic device 101 of FIG. 1) having the multi-state structure in order to maintain, exchange, or change the transmission paths of the reference signal.

According to an embodiment, when the electronic device 101 having the multi-state structure is in a first operation state (for example, a closed state or a down state), the third type switch 513 may switch the first reference signal (P1) of the first frequency band (for example, the band X) input into the first pole terminal to the transmission signal (T1) of the fourth main antenna unit 511 through the first throw terminal and switch the second reference signal (P2) of the second frequency band (for example, the band Y) input into the second pole terminal to the transmission signal (T2) of the first main antenna unit 512 through the second throw terminal.

According to an embodiment, when the electronic device 101 having the multi-state structure is in a second operation state (for example, an open state or an up state), the third type switch 513 may switch the first reference signal (P1) of the first frequency band (for example, the band X) input into the first pole terminal to the transmission signal (T2) of the first main antenna unit 512 through the second throw terminal and switch the second reference signal (P2) of the second frequency band (for example, the band Y) input into the second pole terminal to the transmission signal (T1) of the fourth main antenna unit 511 through the first throw terminal.

According to various embodiments, when the reference signals are transmitted, the third type switch 513 may maintain, exchange, or change the transmission path to transfer RF reception signals provided from the fourth main antenna unit 511 and/or the first main antenna unit 512 and RF reception signals provided from the first to fourth sub antenna units 540, 550, 560, and 570 through different switches 521, 523, 531, and 533 to some or all of a plurality of low-noise amplifiers in consideration of the transmission path of the reference signals.

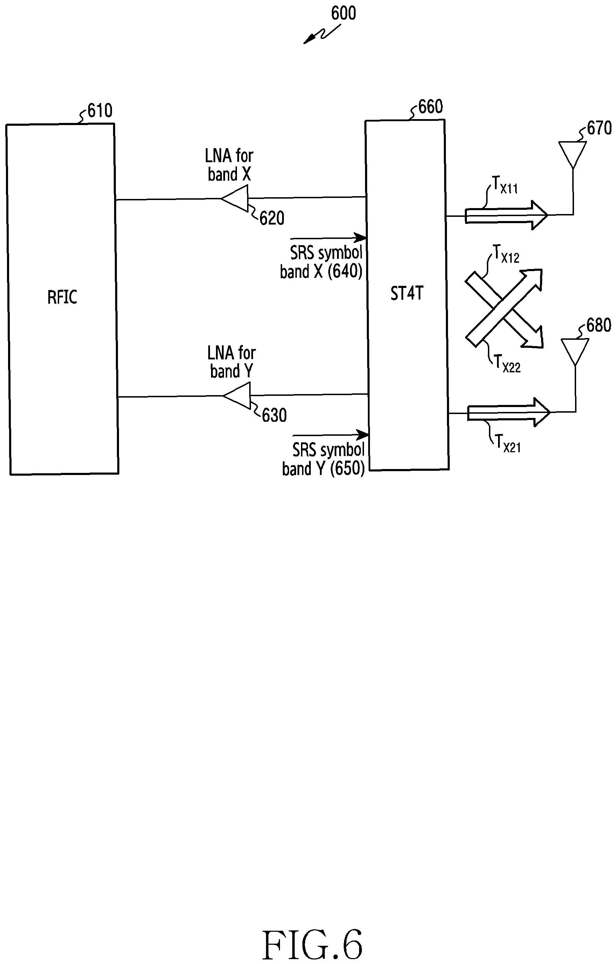

FIG. 6 illustrates a structure (for example, the path operation device 510 FIG. 5) in which a wireless communication device (for example, the wireless communication device 300 of FIG. 3) included in an electronic device (for example, the electronic device 101 of FIG. 1) adaptively operates the transmission path of the reference signal according to an embodiment of the disclosure.

Referring to FIG. 6, a path operation device 600 for operating a transmission path of a reference signal (for example, an SRS symbol) in the wireless communication device 300 according to an embodiment may include an RFIC 610, a plurality of low-noise amplifiers (LNAs) 620 and 630, a switching circuit 660, or a plurality of antenna elements 670 and 680. The path operation device 600 may down-convert an RF signal (hereinafter, referred to as an `RF reception signal') received in a plurality of frequency bands (for example, a band X and a band Y) to a BB signal or an IF signal, output the IF signal to a processor (for example, the processor 120 of FIG. 1), and transmit SRS symbols for each of the plurality of frequency bands.

According to various embodiments, the plurality of antenna elements 670 and 680 may support different frequency bands. Each of the plurality of antenna elements 670 and 680 may be configured to be suitable for a frequency band which the antenna element itself supports. The plurality of antenna elements 670 and 680 may include a first antenna element 670 having a first frequency band (for example, about 2.6 GHz) including a resonance frequency and a second element 680 having a second frequency band (for example, about 3.8 GHz) including a resonance frequency.

According to an embodiment, when the electronic device 101 having the multi-state structure is in the first operation state (for example, the closed state or the down state), the first antenna element 670 may transmit a reference signal (Tx11) in the first frequency band (for example, about 2.6 GHz) which is the resonance frequency and the second antenna element 680 may transmit a reference signal (Tx21) in the second frequency band (for example, about 3.8 GHz) which is the resonance frequency.

According to an embodiment, when the electronic device 101 having the multi-state structure is in the second operation state (for example, the open state or the up state), the first antenna element 670 may shift the resonance frequency from the first frequency band (for example, about 2.6 GHz) to the second frequency band (for example, about 3.8 GHz) and transmit a reference signal (Tx22) in the second frequency band (for example, about 3.8 GHz) and the second antenna element 680 may shift the resonance frequency from the second frequency band (for example, about 3.8 GHz) to the first frequency band (for example, about 2.6 GHz) and transmit a reference signal (Tx12) in the first frequency band (for example, about 2.6GHz).

According to various embodiments, the switching circuit 660 may perform a switching operation for configuring reception paths of one or a plurality of RF reception signals and transmission paths of at least one reference signal. The switching circuit 660 may configure a circuit by using a switching having a multi-input multi-output structure to exchange, change, or select a transmission path of the reference signal for each event so as to share antenna elements. The switch having the multi-input and multi-output structure may be, for example, a switch in a DP4T type (hereinafter, referred to as a `DP4T switch'). In this case, the DP4T switch may include two pole terminals and four throw terminals. A first reference signal 640 and a second reference signal 650 may be input into two pole terminals included in the DP4T switch. Four throw terminals included in the DP4T switch may be electrically connected to the plurality of antenna elements 670 and 680. Among the four throw terminals, for example, two throw terminals (for example, first and third throw terminals) may be electrically connected to the first antenna element 670 and the remaining two throw terminals (for example, second and fourth throw terminals) may be electrically connected to the second antenna element 680. The type of the switch included in the switch circuit 660 may be determined according to the number of supported frequency bands. For example, the switch included in the switching circuit 660 may be a 3P6T type when the wireless communication device 300 supports three frequency bands, and the switch included in the switching circuit 660 may be a 4P8T type when the wireless communication device 300 supports four frequency bands.

According to an embodiment, the DP4T switch included in the switching circuit 660 may switch the first reference signal 640 of the first frequency band (for example, the band X) input into the first pole terminal which is one of the two pole terminals to the transmission signal (Tx11) of the first antenna element 670 through the first throw terminal or to the transmission signal (Tx12) of the second antenna element 680 through the second throw terminal. Further, the DP4T type switch included in the switching circuit 660 may switch the second reference signal 650 of the second frequency band (for example, the band Y) input into the second pole terminal which is one of the two pole terminals to the transmission signal (Tx22) of the first antenna element 670 through the third throw terminal or to the transmission signal (Tx21) of the second antenna element 680 through the fourth throw terminal.

The DP4T switch which can operate as described above may maintain, exchange, or change the transmission path for transferring the reference signals input into the two pole terminals to the plurality of antenna elements 670 and 680. The DP4T type switch may consider the operation state of the electronic device (for example, the electronic device 101 of FIG. 1) having the multi-state structure in order to maintain, exchange, or change the transmission path of the reference signal.

According to an embodiment, when the electronic device 101 having the multi-state structure is in the first operation state (for example, the closed state or the down state), the DP4T switch may switch the first reference signal 640 of the first frequency band (for example, the band X) input into the first pole terminal to the transmission signal (Tx11) of the first antenna element 680 through the first throw terminal and switch the second reference signal 650 of the second frequency band (for example, the band Y) input into the second pole terminal to the transmission signal (Tx21) of the second antenna element 680 through the fourth throw terminal.

According to an embodiment, when the electronic device 101 having the multi-state structure is in the second operation state (for example, the open state or the up state), the DP4T switch may switch the first reference signal 640 of the first frequency band (for example, the band X) input into the first pole terminal to the transmission signal (Tx12) of the second antenna element 680 through the second throw terminal and switch the second reference signal 650 of the second frequency band (for example, the band Y) input into the second pole terminal to the transmission signal (Tx22) of the first antenna element 670 through the third throw terminal.

According to various embodiments, when transmitting reference signals, the switching circuit 660 may maintain, exchange, or change the reception path to transfer RF reception signal provided from the first antenna element 670 and/or the second antenna element 680 to some or all of the plurality of low-noise amplifiers 620 and 630 in consideration of the transmission path of the reference signals.

According to an embodiment, the first RF reception signal may use a frequency band (for example, the band X) which is the same as the first reference signal and the second RF reception signal may use a frequency band (for example, the band Y) which is the same as the second reference signal. The first RF reception signal may be received through the first antenna element 670 and transferred to a first low-noise amplifier 620 which is one of the plurality of low-noise amplifiers 620 and 630 by the switching circuit 660. The second RF reception signal may be received through the second antenna element 680 and transferred to a second low-noise amplifier 630 which is one of the plurality of low-noise amplifiers 620 and 630 by the switching circuit 660.

According to an embodiment, the plurality of low-noise amplifiers 620 and 630 may include the first low-noise amplifier 620 and the second low-noise amplifier 630. The first low-noise amplifier 620 may amplify the first RF reception signal input from the switching circuit 660, minimize a noise component, and then transfer the first RF reception signal to the RFIC 610. The second low-noise amplifier 630 may amplify the second RF reception signal input from the switching circuit 660, minimize a noise component, and then transfer the second RF reception signal to the RFIC 610.

According to an embodiment, the RFIC 610 may down-convert the first RF reception signal in the first frequency band (for example, the band X) which has been low-noise amplified by the first low-noise amplifier 620 into a BB reception signal or an IF reception signal and output the BB reception signal or the IF reception signal. Further, RFIC 610 may down-convert the second RF reception signal in the second frequency band (for example, the band Y) which has been low-noise amplified by the second low-noise amplifier 630 into a BB reception signal or an IF reception signal and output the BB reception signal or the IF reception signal.

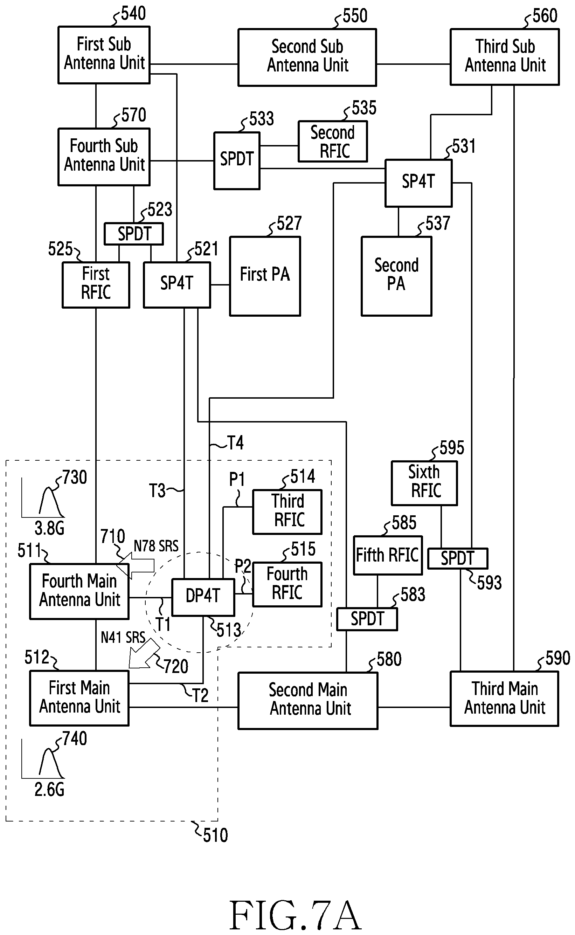

FIG. 7A illustrates an example in which the electronic device 101 switches a transmission path of a reference signal in consideration of an operation state according to an embodiment of the disclosure.

Referring to FIG. 7A, when the electronic device 101 having the multi-state structure, such as the slidable structure, the rollable structure, the two-stage foldable structure, and the three-stage foldable structure, is in a down state (or a closed state) which is a first operation state, the electronic device 101 may control the third type switch 513 to configure a first path 710 for transferring a first reference signal of a first frequency band 730 (for example, about 3.8 GHz) provided from the third RFIC 514 through the connection P1 to the fourth main antenna unit 511 through the connection T1 and configure a second path 720 for transferring a second reference signal of a second frequency band (for example, about 2.6 GHz) 740 provided from the fourth RFIC 515 through the connection P2 to the first main antenna unit 512 through the connection T2. In this case, a resonance frequency 730 of the fourth main antenna unit 511 may be the first frequency band (for example, about 3.8 GHz) and a resonance frequency 740 of the first main antenna unit 512 may be the second frequency band (for example, about 2.6 GHz).

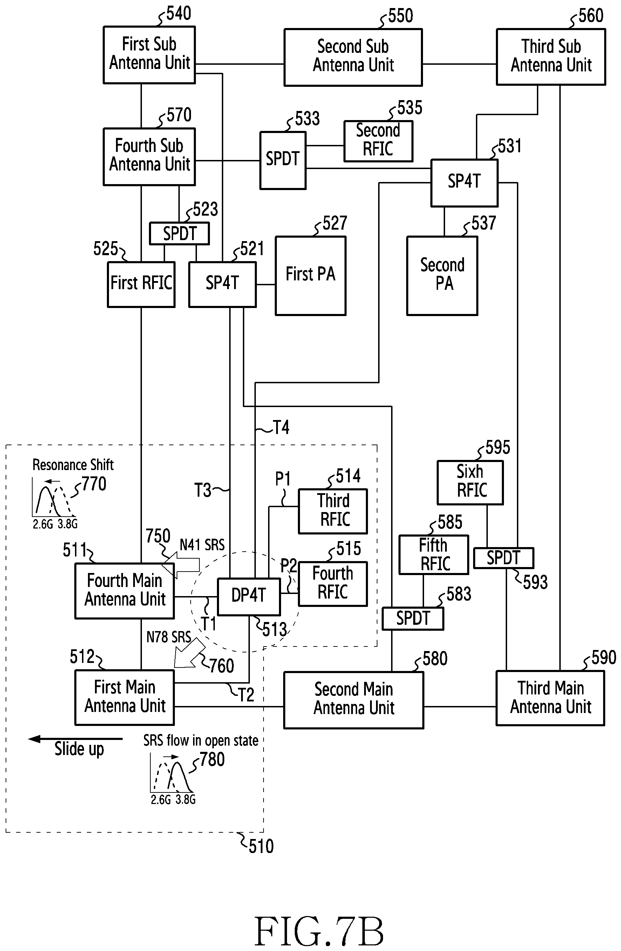

FIG. 7B illustrates another example in which the electronic device 101 switches the transmission path of the reference signal in consideration of the operation state according to an embodiment of the disclosure.

Referring to FIG. 7B, when the electronic device 101 having the multi-state structure, such as the slidable structure, the rollable structure, the two-stage foldable structure, and the three-stage foldable structure, is in an up state (or an open state) which is a second operation state, the electronic device 101 may control the third type switch 513 to configure a third path 760 for transferring a first reference signal of a first frequency band 730 (for example, about 3.8 GHz) provided from the third RFIC 514 through the connection P1 to the first main antenna unit 512 through the connection T2 and configure a fourth path 750 for transferring a second reference signal of a second frequency band (for example, about 2.6 GHz) 740 provided from the fourth RFIC 515 through the connection P2 to the fourth main antenna unit 511 through the connection T1. In this case, the resonance frequency 770 of the fourth main antenna unit 511 may be shifted from the first frequency band (for example, about 3.8 GHz) to the second frequency band (for example, about 2.6 GHz), and the resonance frequency 780 of the first main antenna unit 512 may be shifted from the second frequency band (for example, about 2.6 GHz) to the first frequency band (for example, about 3.8 GHz).

As illustrated in FIGs. 7A and 7B, when the transmission path of the reference signal (for example, the SRS) is maintained, exchanged, or changed in consideration of the operation state of the electronic device, the reference signal may be transmitted to an antenna optimized for each transmission path, and thus the downlink performance can be improved as shown in [Table 2] below.

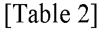

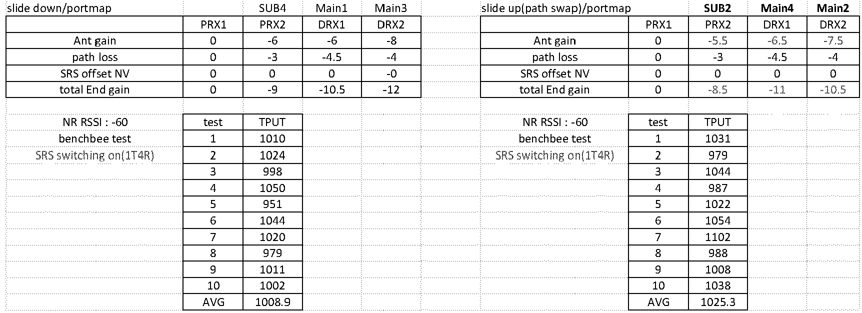

According to [Table 2], compared to the conventional art in which the electronic device having the up/down structure can acquire the same performance regardless of an event, it can be identified that improvement of 10% can be achieved in performance deterioration. If the transmission path of the reference signal is mapped to acquire a better gain in the up state (or the open state), higher improvement of the downlink performance can be expected than that in the down state (or the closed state).

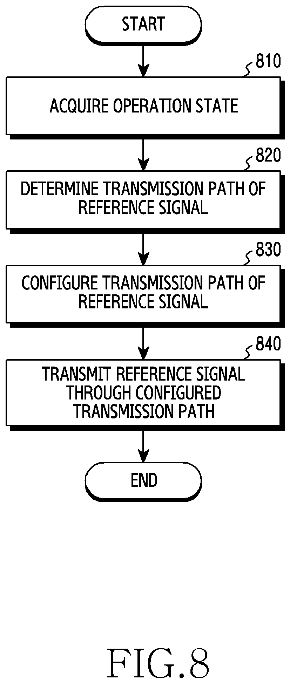

FIG. 8 illustrates the control flow in which an electronic device (for example, the electronic device 101 of FIG. 1) operates a transmission path of a reference signal according to an embodiment of the disclosure.

Referring to FIG. 8, in operation 810 according to an embodiment, the electronic device 101 may acquire an operation state. The operation state may be defined in accordance with a multi-state structure of the electronic device 101 that can physically shift an antenna resonance frequency. The multi-state structure may be a device having, for example, the multi-state structure, for example, a slidable structure, a rollable structure, a two-stage foldable structure, or a three-stage foldable structure. The electronic device 101 having the slidable structure may acquire an operation state among a down state (for example, see FIG. 4A(b)) or an up state (for example, see FIG. 4A(a)). The electronic device 101 having the rollable structure may acquire an operation state among a down state (for example, see FIG. 4B(a)) or an up state (for example, see FIG. 4B(b)). The electronic device 101 having the two-stage foldable structure may acquire an operation state among an open state (for example, see FIGs. 4C(a) and (b)) or a closed state (for example, see FIGs. 4C(c) and (d)). The electronic device 101 having the three-stage foldable structure may acquire an operation state among an open state (for example, see FIG. 4D(a)) or a closed state (for example, see FIG. 4D(b)).

According to an embodiment, the electronic device 101 may use at least one sensor (for example, the sensor module 176 of FIG. 1) in order to check an operation state. The at least one sensor may be determined as one sensor or a combination of a plurality of sensors, for example, a location sensor, an infrared sensor, a pressure sensor, a gyro sensor, an acceleration sensor, an angle sensor, a Hall sensor, an ultrasonic sensor, and/or a magnetic sensor. The electronic device 101 may identify the operation state of the electronic device, based on sensor data acquired through at least one sensor.

In operation 820 according to an embodiment, the electronic device 101 may determine a transmission path of a reference signal, based on the acquired operation state. When the operation state is not changed from the down state (or the closed state) or the up state (or the open state), the electronic device 101 may make a decision to maintain the existing transmission path of the reference signal. However, when the operation state is changed to another state from the down state (or the closed state) or the up state (or the open state), the electronic device 101 may make a decision to exchange or change the transmission path of the reference signal.

In operation 830 according to an embodiment, the electronic device 101 may configure the transmission path of the reference signal. The electronic device 101 may control, for example, a target switch (for example, the third type (for example, DP4T) switch 513 of FIG. 7) to form the transmission path determined in consideration of the operation state. FIGs. 7A and 7B may be referred to for an example in which the electronic device 101 configures the transmission path of the reference signal in consideration of the operation state.

In operation 840 according to an embodiment, the electronic device 101 may transmit a reference signal in a predetermined frequency band for each transmission path configured for the reference signal. The predetermined frequency band for each transmission path may be shifted due to a change in the operation state. That is, a resonance frequency of an antenna electrically connected to the corresponding transmission path may be shifted due to an exchange or a change in the transmission path according to the operation state.

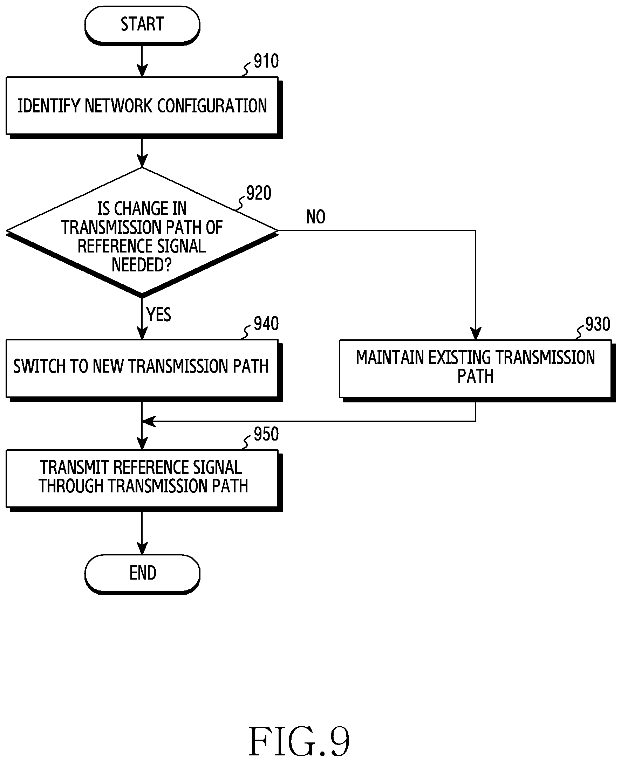

FIG. 9 illustrates the control flow in which the electronic device (for example, the electronic device 101 of FIG. 1) operates the transmission path of the reference signal according to another embodiment of the disclosure.

Referring to FIG. 9, in operation 910 according to an embodiment, the electronic device 101 may identify a network configuration. The electronic device 101 may identify whether, for example, the corresponding network can support ENDC.

In operation 920 according to an embodiment, when the corresponding network can support ENDC, the electronic device 101 may determine whether an exchange or a change in the transmission path of the reference signal is needed. The electronic device 101 may detect, for example, the current operation state and determine whether the exchange or the change in the transmission path of the reference signal is needed based on the detected operation state.

According to an embodiment, in order to maintain the PCC performance (for example, LTE (legacy) performance) in a weak electric field, the electronic device 101 may determine a change in the transmission path of the SRS to another antenna. For example, in the case of a combination of FDD LTE of the PCC and TDD of the SCC to support ENDC, the switch of the wireless communication device included in the electronic device 101 may be basically designed to not share the transmission path (for example, SRS path) of the reference signal or the transmission/reception path (Tx/Rx path) of LTE. In this case, since the transmission path of the reference signal can be selected for each situation, both the performance of LTE and the performance of SUB6 can be adaptively improved.

According to an embodiment, the electronic device 101 may analyze at least one of whether transmission of the reference signal is supported in the 1T4R structure, whether a PCC band is an intermediate/high-frequency band and an SCC band is n41 in Sub-6, and/or whether a received signal strength indication (RSSI) (or reference signal received power (RSRP)) is a threshold value (for example, -90 dBm or -115 dBm) and determine whether an exchange or a change in the transmission path of the reference signal is needed based on the analysis result. For example, the electronic device 101 may maintain the existing path when at least one of the three requirements is not satisfied and may exchange or change the existing path including the path to transmit the reference signal when all of the three requirements are satisfied.

When the above-described scheme is applied, the electronic device 101 may assign a priority to LTE communication to operate the transmission path of the reference signal when the high performance of LTE is required based on the RSSI or the RSRP. All the three requirements may be applied according to an antenna structure/path combination. That is, the electronic device 101 may apply all of them when the same RF path is shared in ENDC FDD(legacy) + TDD SUB6(NR) SRS path.

According to an embodiment, the electronic device 101 may determine maintenance of the existing path in operation 930 when there is no need to change the transmission path of the reference signal, and may switch the existing transmission path to a new transmission path in operation 940 when there is a need to change the transmission path of the reference signal. The electronic device 101 may transmit the reference signal for each frequency band through the maintained or switched transmission path in operation 950.

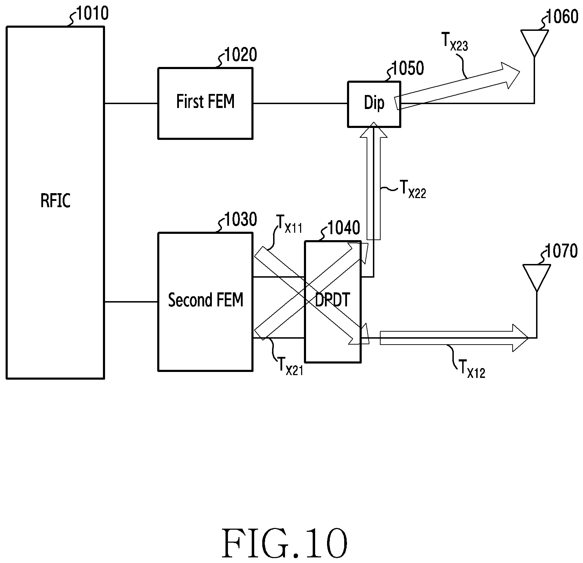

FIG. 10 illustrates another example of the structure in which the electronic device (for example, the electronic device 101 of FIG. 1) configures the transmission path of the reference signal according to an embodiment of the disclosure.

Referring to FIG. 10, the electronic device 101 according to an embodiment may support an NSA mode, based on a dual connectivity (for example, E-UTRAN new radio dual connectivity (ENDC)) technology according to an embodiment. The ENDC technology may support dual connectivity to an LTE network and an NR network by using, for example, a first frequency band (for example, an LTE support anchor band) and a second frequency band (for example, FR1 or Sub-6). The electronic device 101 may include at least one RFIC 1010, a plurality of front-end modules (FEMs) 1020 and 1030, at least one switch 1040, a diplexer 1050, and at least two antenna elements 1060 and 1070.

According to an embodiment, the electronic device 101 may operate (for example, maintain, exchange, or change) a first path for a first signal in a first frequency band (for example, an LTE support anchor band) and a second path for a second signal (for example, the SRS) in a second frequency band (for example, FR1 or Sub-6), thereby simultaneously sharing the first path and the second path to not open (for example, short-circuit) the two signals. The ENDC may be a technology for increasing a data transmission speed by using all of communication in a first communication network (for example, an LTE network) using the first frequency band (for example, the LTE support anchor band) and communication in a second communication network (for example, a 5G or NR network) using the second frequency band (for example, FR1 or Sub-6).

According to an embodiment, when transmitting the SRS, the electronic device 101 supporting ENDC may change a path (LTE path) for an LTE signal from a main path (for example, a path for supporting frequencies from 1.7 GHz to 3 GHz) to a sub path (for example, a path for supporting frequencies below 0.9 GHz) and then transmit the SRS through the main path (for example, the path for supporting frequencies from 1.7 GHz to 3 GHz). However, when maintenance of the LTE performance is desired, the electronic device 101 may maintain the path (LTE path) for the LTE signal in the main path (for example, the path for supporting frequencies from 1.7 GHz to 3 GHz) and configure the path to transmit the SRS through the sub path (for example, the path for supporting frequencies below 0.9 GHz). For example, the electronic device 101 may control a DPDT 1040 which is a switch receiving an LTE signal Tx11 and an SRS symbol Tx21 from a second FEM 1030 to maintain the existing path Tx12 having transmitted the LTE signal and change a path Tx22 to transmit the SRS symbol. Accordingly, the LTE signal provided from the second FEM 1030 to the DPDT 1040 may be transmitted through a second antenna element 1070 by using a second frequency band (for example, FR1 (Sub-6) or LTE), and the SRS symbol provided from the second FEM 1030 to the DPDT 1040 may be transmitted through a first antenna element 1060 by using a first frequency band (for example, an LTE support anchor band).

According to the above-proposed embodiment, when changing the LTE path, the electronic device 101 having the multi-state structure may predict even the generation of call drop and/or mute that may deteriorate the quality of LTE communication and switch (for example, exchange or change) the transmission path of the reference signal. However, if the change does not include the quality of LTE communication, when the electronic device 101 transmits the SRS symbol, the electronic device 101 may change the path for transmitting the LTE signal and then exchange or change the transmission path to transmit the SRS symbol through the existing path having transmitted the LTE signal.

According to an embodiment, when the UWB is operated, the electronic device 101 may exchange the transmission path of the SRS symbol and operate the transmission paths to be separated and divided without using the same antenna element as the UWB. When the UWB is not operated, the electronic device 101 may operate the transmission path of the SRS symbol to transfer the same to the first antenna element 1060 through the diplexer 1050. However, when the UWB is executed or activated, the electronic device 101 may change the transmission path of the SRS symbol to the path for transmission to the second antenna element 1070 and operate the transmission path in order to avoid interference with the UWB.

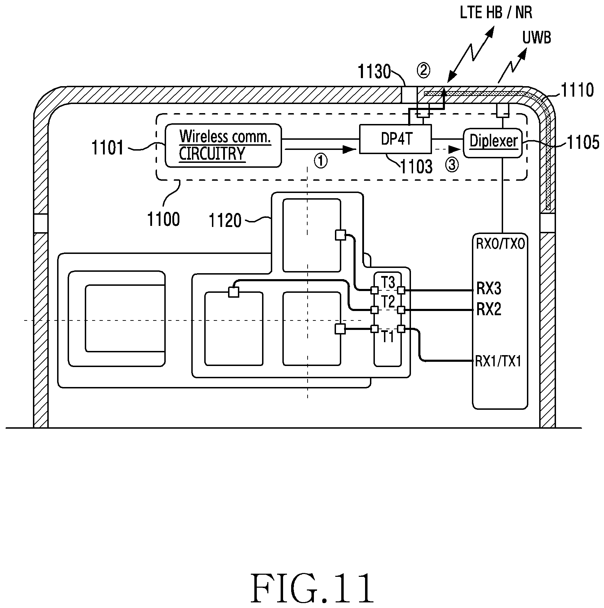

FIG. 11 illustrates another example of the structure in which the electronic device (for example, the electronic device 101 of FIG. 1) configures the transmission path of the reference signal according to an embodiment of the disclosure.

Referring to FIG. 11, when the electronic device 101 according to an embodiment shares a path for transmitting a UWB signal and an SRS transmission path, the electronic device 101 may have a structure for exchanging the path for transmitting the UWB signal and the SRS transmission path. The electronic device 101 may include, for example, a wireless communication device 1100 configured by a switch 1103 of a DP4T type.

According to an embodiment, the wireless communication device 1100 may be physically combined with a first antenna element 1110 (for example, a UWB antenna element) and a second antenna element 1120 (for example, an NR antenna element). A resonance frequency of the second antenna element 1120 (for example, the NR antenna element) may have a high frequency such as n41, n77, or n78 which is some frequency bands included in Sub-6. In this case, the wireless communication device 1100 may be designed to have a structure to avoid the SRS output. The wireless communication device 1100 may include, for example, a wireless communication circuitry 1101, a DP4T type switch 1103, or a diplexer 1105.

According to an embodiment, the wireless communication device 1100 may allow the UWB signal path (③) and the SRS transmission path (②) to share one antenna element 1110 (for example, the first antenna element) by the DP4T type switch 1103. The wireless communication device 1100 may control a switching operation of the switch 1103 to select an antenna element physically connected to the SRS transmission path as the antenna according to the UWB operation or the SRS transmission operation. The switch 1103 may be configured by DP4T, DPDT, or SPDT. The switch 1103 may be designed by DP4T in order to minimize loss of the SRS transmission path.

According to an embodiment, the DP4T type switch 1103 may selectively transfer a UWB signal and/or an SRS symbol (①) provided from the wireless communication circuitry 1101 to one of the first antenna element 1110 (for example, LTE HB) (②) or the second antenna element 1120 (for example, UWB) (③) in consideration of the UWB operation or the SRS transmission operation.

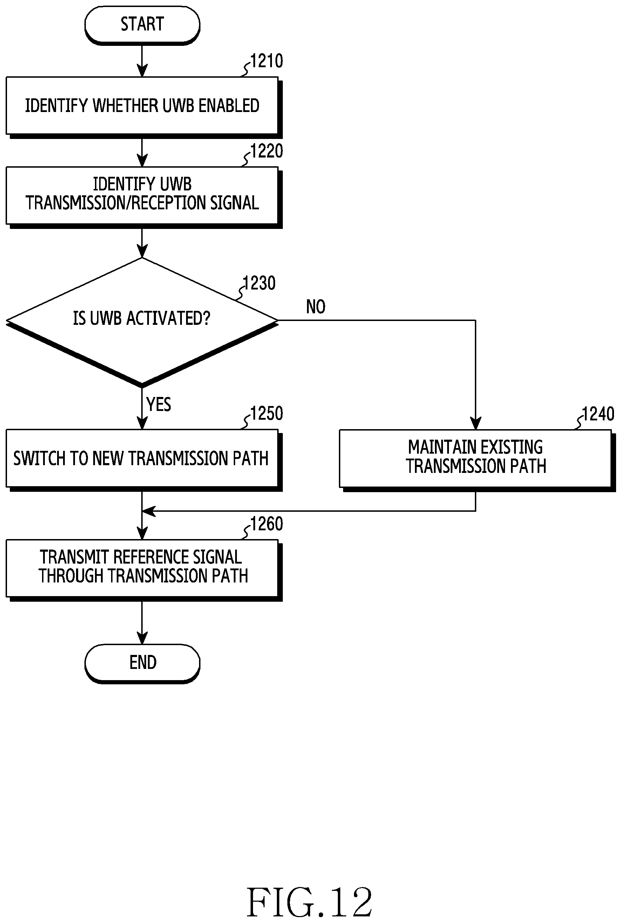

FIG. 12 illustrates the control flow in which the electronic device (for example, the electronic device 101 of FIG. 1) operates the transmission path of the reference signal according to another embodiment of the disclosure.

Referring to FIG. 12, in operation 1210 according to an embodiment, the electronic device 101 may identify whether the UWB is available. Whether the UWB is available may be identified by whether the UWB is enabled or disabled. When the UWB is enabled, the electronic device 101 may perform communication using the UWB by activation of the UWB or may not perform communication using the UWB by inactivation of the UWB. When the UWB is disabled, the UWB cannot be activated, and thus the electronic device 101 may not perform communication using the UWB. The use of the UWB may be enabled as the electronic device 101 receives allocation of, for example, UWB resources to be used for communication from the network, and the use of the UWB may be disabled as the electronic device 101 returns the allocated UWB resources.

According to an embodiment, when the UWB resources are not allocated and the UWB is disabled, the electronic device 101 may configure a transmission path to transmit a reference signal to an antenna element having the excellent transmission performance of the reference signal among the first antenna element (for example, LTE HB) (②) and the second antenna element (for example, UWB) (③).

According to an embodiment, when the UWB resources are allocated and the UWB is enabled, the electronic device 101 may identify whether there is a UWB signal to be transmitted/received in operation 1220 and determine UWB activation or UWB inactivation, based on the identification result in operation 1230. For example, when there is a UWB signal to be transmitted or/and received, the electronic device 101 may activate the UWB to transmit or/and receive the UWB signal and, when there is no UWB signal to be transmitted or/and received, may deactivate the activated UWB. In this case, the electronic device 101 may determine that the UWB is activated when it is identified that there is the UWB transmission/reception signal and may determine that the UWB is deactivated when it is not identified that there is the UWB transmission/reception signal. The UWB activation may indicate an operation state for transmitting or receiving the UWB signal using the allocated UWB resources, and the UWB inactivation may indicate an operation state for not transmitting and receiving the UWB signal using the allocated UWB resources.

According to an embodiment, before performing an operation for identifying the UWB transmission/reception signal in operation 1220, the electronic device 101 may perform an advance operation for determining whether the corresponding operation is needed. The electronic device 101 may determine at least one requirement indicating, for example, a network configuration, whether a predetermined switch structure (for example, 1T4R) is supported, and/or whether a predetermined frequency band (for example, TDD SUB6) is activated and determine whether to perform operation 1220 in consideration of the determination result.

According to an embodiment, the electronic device 101 may identify the network configuration. The electronic device 101 may identify whether, for example, the corresponding network has a configuration which can support ENDC. When the corresponding network has the configuration which can support ENDC, the electronic device 101 may determine whether an exchange or a change in the SRS transmission path is needed. The electronic device 101 may analyze, for example, at least one of whether transmission of the reference signal is supported in the 1T4R structure and whether a Sub-6 band is activated through identification of an SCC band for supporting ENDC and determine whether to perform an operation for identifying whether there is the UWB transmission/reception signal, based on the analysis result. For example, the electronic device 101 has the configuration which can support ENDC among the three requirements but, when transmission of the reference signal is not supported in the 1T4R structure, may communicate with a base station.

According to an embodiment, when at least one of the three requirements is not satisfied, the electronic device 101 may determine maintenance of the existing transmission path in operation 1240 without performing operation 1220 and operation 1230. However, when all the three requirements are satisfied, the electronic device 101 may identify the UWB transmission/reception signal in operation 1220 and operation 1230 and determine whether the UWB is activated in consideration of the identification result.

According to an embodiment, the electronic device 101 may determine maintenance of the existing transmission path in operation 1240 when it is determined that the UWB is deactivated, and may switch to a new transmission path in operation 1250 when it is determined that the UWB is activated.

According to an embodiment, in operation 1250, the electronic device 101 may determine a new transmission path to which the existing path including the path to transmit the reference signal is exchanged or changed and perform switching for configuring the determined transmission path. The electronic device 101 may perform, for example, the switching of the transmission path in a guard period existing between a transmission period and a reception period according to the TDD scheme. The guard period is a period configured for switching from the downlink (DL) to the uplink (UL), and the electronic device 101 does not need to transmit and receive data during the guard period and thus may perform an operation for LTL/DL switching, such as timing alignment or RF chain switching.

In operation 1260 according to an embodiment, the electronic device 101 may transmit the reference signal for each frequency band through the maintained or switched transmission path, so that the UWB signal and the SRS symbol can be transmitted without interference.

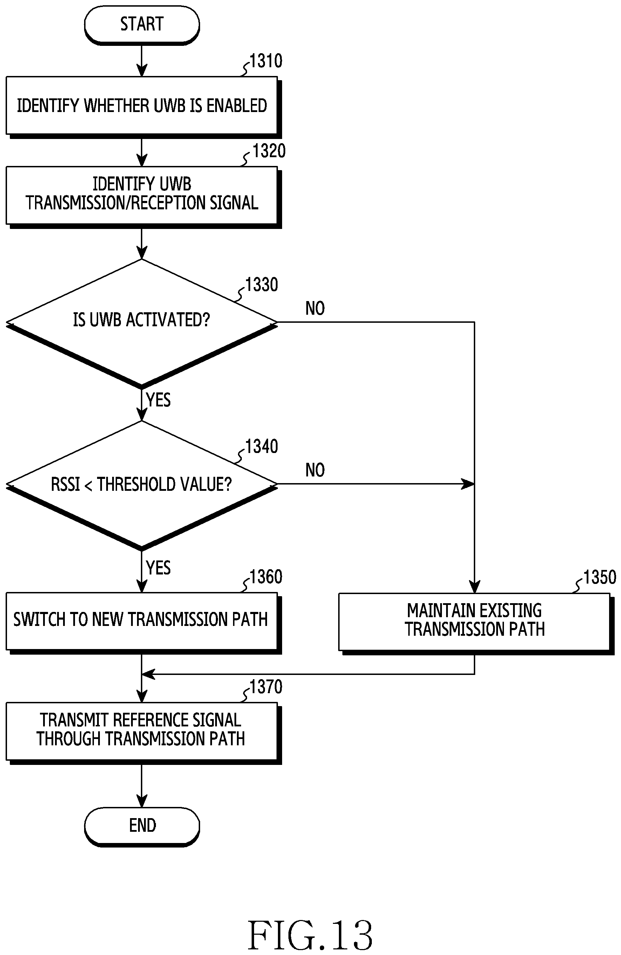

FIG. 13 illustrates the control flow in which the electronic device (for example, the electronic device 101 of FIG. 1) operates the transmission path of the reference signal according to another embodiment of the disclosure.

Referring to FIG. 13, when the UWB operation is enabled, the electronic device 101 according to an embodiment may identify there is a UWB signal to be transmitted/received and determine whether the UWB is activated only when there is the UWB signal to be transmitted/received in operations 1310 to 1330. The operation performed by the electronic device 101 in operations 1310 to 1330 may correspond to the same operation in operations 1210 to 1220 of FIG. 12.

According to an embodiment, when the UWB is activated, the electronic device 101 may determine whether the electronic device 101 is located in a weak electric field region in operation 1340. The electronic device 101 may determine, for example, whether the RSSI in NR is smaller than a threshold value (for example, -90 dBm) and recognize whether the electronic device is located in the weak electric field region, based on the result. In another example, the electronic device 101 may determine whether the RSRP in NR is smaller than a threshold value (for example, - 115 dBm) and recognize whether the electronic device is located in the weak electric field region, based on the result. This is to allow the electronic device 101 to determine a change in the transmission path of the SRS to another antenna in order to maintain the PCC performance (for example, LTE (legacy) performance) in the weak electric field region.

According to an embodiment, when the RSSI or the RSRP in NR is larger than or equal to the threshold value (for example, -90 dMb or -115 dBm), the electronic device 101 may determine maintenance of the existing transmission path in operation 1350. However, when the RSSI or the RSRP in NR is smaller than the threshold value (for example, -90 dMb or -115 dBm), the electronic device 101 may determine a new transmission path to which the existing path including the path to transmit the reference signal is exchanged or changed and perform switching for configuring the determined transmission path in operation 1360. The electronic device 101 may perform, for example, the switching of the transmission path in a guard period existing between a transmission period and a reception period according to the TDD scheme.

In operation 1370 according to an embodiment, the electronic device 101 may transmit the reference signal for each frequency band through the maintained or switched transmission path, so that the UWB signal and the SRS symbol can be transmitted without interference.

In the embodiment proposed in FIG. 13, the transmission path of the reference signal is operated by additionally considering RSSI conditions in NR, and thus the controlled state may be more precisely identified. At this time, the reference signal (for example, the SRS symbol) may operate in an open loop and may increase as an electric field is weaker. As the reference signal is larger, the size of interference harmonics may become larger. Accordingly, the SRS transmission path can be selected by splitting a range up to an RSSI having no interference.

[Table 3] below defines an offset value for each path corresponding to a level of the reference signal.

**[Table 3]**

| Rx level (open loop) | (+) SRS NV offset | |
|---|---|---|
| -40 | PRX1 (Master) | 19.04(+0dB) |
| | DRX2(Master) | 18.98(+3dB) |
| | DRX1(IF SUB) | 18.53(+3dB) |
| | PRX2(IF SUB) | 18.54(+3dB) |
| -50 | PRX1 (Master) | 23.04(+0dB) |
| | DRX2(Master) | 22.98(+3dB) |
| | DRX1(IF SUB) | 22.53(+3dB) |
| | PRX2(IF SUB) | 22.54(+3dB) |
| -60 | PRX1 (Master) | 27.38(+0dB) |
| | DRX2(Master) | 26.02(+3dB) |
| | DRX1(IF SUB) | 25.62(+3dB) |
| | PRX2(IF SUB) | 25.36(+3dB) |

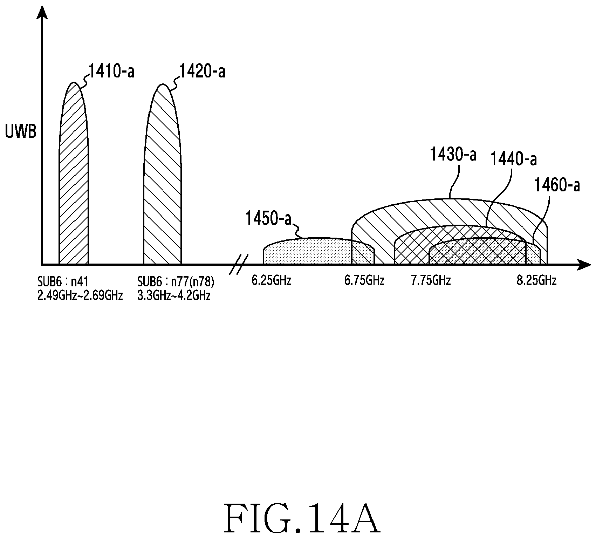

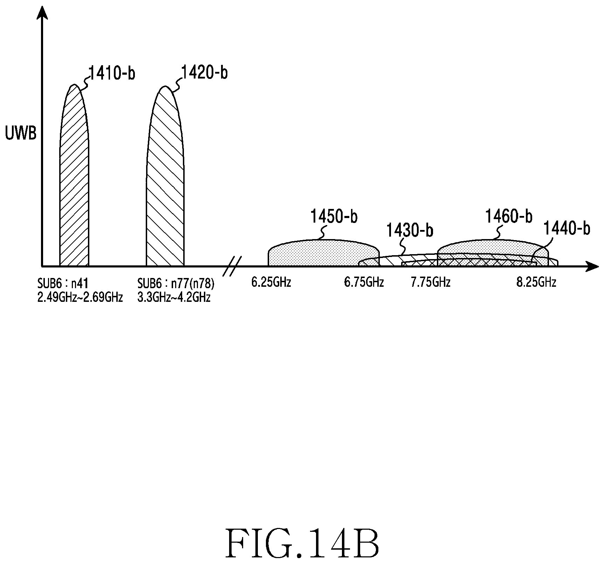

FIG. 14A and FIG. 14B illustrate influence between a transmission frequency of a reference signal and a signal of an ultra-high frequency band.

Unlike an embodiment of the disclosure, referring to FIG. 14A, when SRS symbols 1410_a, 1420_a, 1430_a, and 1440_a and UWB signals 1450_a and 1460_a share antennas, the harmonics of the SRS symbols 1410_a, 1420_a, 1430_a, and 1440_a may act as interference to the UWB frequency bands 1450_a and 1460_a.

As described above, the SRS symbol of instantaneous large output during UWB communication may interrupt the communication and interfere distance measurement or angle measurement, which is a main UWB function, and thus a design to solve the problem and achieve the optimal downlink performance of the SRS transmission path at the same time may be needed.

Referring to FIG. 14 according to an embodiment of the disclosure, when the UWB is operated and an antenna path that is not shared with a UWB transmission path is selected as an SRS transmission path, isolation between antennas and interference to a radiation state may be rapidly reduced as illustrated and thus the UWB performance can be maintained even though the UWB and SRS switching are simultaneously supported.

According to various embodiments, an electronic device (for example, the electronic device 101 of FIG. 1) having a multi-state structure in which an antenna resonance frequency is physically shifted may include at least two antenna elements, each of which is configured to support a plurality of frequency bands, a radio frequency integrated circuit configured to down-convert a radio frequency signal into a baseband signal or up-convert the baseband signal into the radio frequency signal, a switching circuit configured to selectively connect the at least two antenna elements to the radio frequency integrated circuit, and at least one processor configured to process the baseband signal provided form the radio frequency integrated circuit or provide the baseband signal to the radio frequency integrated circuit, wherein at least one processor is configured to determine an antenna element to switch a first reference signal among the at least two antenna elements in consideration of an operation state of the electronic device according to the multi-state structure and control the switching circuit to transfer the first reference signal to the determined antenna element according to the determination.

According to various embodiments, when the multi-state structure is a slidable structure, the at least one processor may be configured to control the switching circuit to switch the first reference signal to a first antenna element which is one of the at least two antenna elements when the operation state of the electronic device is a down state, and control the switching circuit to switch the first reference signal to a second antenna element which is another of the at least two antenna elements when the operation state of the electronic device is an up state.

According to various embodiments, when the multi-state structure is a foldable structure, the at least one processor may be configured to control the switching circuit to switch the first reference signal to a first antenna element which is one of the at least two antenna elements when the operation state of the electronic device is a closed state, and control the switching circuit to switch the first reference signal to a second antenna element which is another of the at least two antenna elements when the operation state of the electronic device is an open state.

According to various embodiments, the first frequency band may be a band of 3.8 GHz, and the second frequency band may be a band of 2.6 GHz.

According to various embodiments, the electronic device may further include at least one sensor configured to detect the operation state of the electronic device according to the multi-state structure.

According to various embodiments, the switching circuit may be a double pole 4 throw (DP4T) switch.

According to various embodiments, the switching circuit may include two single pole double throw switches.

According to various embodiments, a method of operating a transmission chain of a reference signal by an electronic device (for example, the electronic device 101 of FIG. 1) having a multi-structure state in which an antenna resonance frequency is physically shifted may include an operation of acquiring an operation state of the electronic device according to the multi-state structure, an operation of determining one antenna element to transmit a first reference signal among at least two antenna elements in consideration of the acquired operation state, and an operation of controlling a switching circuit to switch the first reference signal to the determined antenna element.

According to various embodiments, when the multi-state structure is a slidable structure, the method may include an operation of determining transmission of the first reference signal to a first antenna element which is one of the at least two antenna elements when the operation state of the electronic device is a down state and an operation of determining transmission of the first reference signal to a second antenna element which is another of the at least two antenna elements when the operation state of the electronic device is an up state.

According to various embodiments, when the multi-state structure is a foldable structure, the method may include an operation of determining transmission of the first reference signal to a first antenna element which is one of the at least two antenna elements when the operation state of the electronic device is a closed state and an operation of determining transmission of the first reference signal to a second antenna element which is another of the at least two antenna elements when the operation state of the electronic device is an open state.

According to various embodiments, the first frequency band may be a band of 3.8 GHz, and the second frequency band may be a band of 2.6 GHz.

According to various embodiments, the method may further include an operation of acquiring at least one of a received signal strength indication (RSSI) or a reference signal received power (RSRP), and at least one of the acquired RSSI or RSRP may be further considered to determine an antenna element to transmit the first reference signal.

According to various embodiments, the operation of determining may include an operation of replacing or changing a path to transmit the first reference signal in case that the acquired RSSI is smaller than a first threshold value or the RSRP is smaller than a second threshold value.

## Claims

1. An electronic device having a multi-state structure in which an antenna resonance frequency can be physically shifted, the electronic device comprising:
at least two antenna elements, each of which is configured to support a plurality of frequency bands;
a radio frequency integrated circuit configured to down-convert a radio frequency signal into a baseband signal or up-convert the baseband signal into the radio frequency signal;
a switching circuit configured to selectively connect the at least two antenna elements to the radio frequency integrated circuit; and
at least one processor configured to process the baseband signal provided from the radio frequency integrated circuit or provide the baseband signal to the radio frequency integrated circuit,
wherein at least one processor is configured to determine an antenna element to switch a first reference signal among the at least two antenna elements in consideration of an operation state of the electronic device according to the multi-state structure and control the switching circuit to transfer the first reference signal to the determined antenna element according to the determination.

2. The electronic device of claim 1, wherein the at least one processor is configured to, in case that the multi-state structure is a slidable structure:
in case that the operation state of the electronic device is a down state, control the switching circuit to switch the first reference signal to a first antenna element which is one of the at least two antenna elements; and
in case that the operation state of the electronic device is an up state, control the switching circuit to switch the first reference signal to a second antenna element which is another of the at least two antenna elements.

3. The electronic device of claim 1, wherein the at least one processor is configured to, in case that the multi-state structure is a foldable structure:
in case that the operation state of the electronic device is a closed state, control the switching circuit to switch the first reference signal to a first antenna element which is one of the at least two antenna elements; and
in case that the operation state of the electronic device is an open state, control the switching circuit to switch first the reference signal to a second antenna element which is another of the at least two antenna elements.

4. The electronic device of claim 2 or 3, wherein the plurality of frequency bands comprise a first frequency band supported by the first antenna element and a second frequency band supported by the second antenna element, and
wherein the first frequency band is a band of 3.8 GHz, and the second frequency band is a band of 2.6 GHz.

5. The electronic device of claim 1, further comprising at least one sensor configured to detect the operation state of the electronic device according to the multi-state structure.

6. The electronic device of claim 1, wherein the switching circuit is a double pole 4 throw (DP4T) switch.

7. The electronic device of claim 6, wherein the switching circuit includes two single pole double throw switches.

8. A method of operating a transmission chain of a reference signal by an electronic device having a multi-structure state in which an antenna resonance frequency can be physically shifted, the method comprising:
acquiring an operation state of the electronic device according to the multi-state structure;
determining one antenna element to transmit a first reference signal among at least two antenna elements in consideration of the acquired operation state; and controlling a switching circuit to switch the first reference signal to the determined antenna element.

9. The method of claim 8, comprising, in case that the multi-state structure is a slidable structure:
determining transmission of the first reference signal to a first antenna element which is one of the at least two antenna elements in case that the operation state of the electronic device is a down state; and
determining transmission of the first reference signal to a second antenna element which is another of the at least two antenna elements in case that the operation state of the electronic device is an up state.

10. The method of claim 8, comprising, in case that the multi-state structure is a foldable structure:
determining transmission of the first reference signal to a first antenna element which is one of the at least two antenna elements in case that the operation state of the electronic device is a closed state; and
determining transmission of the first reference signal to a second antenna element which is another of the at least two antenna elements in case that the operation state of the electronic device is an open state.

11. The method of claim 9 or 10, wherein the plurality of frequency bands comprise a first frequency band supported by the first antenna element and a second frequency band supported by the second antenna element, and
wherein the first frequency band is a band of 3.8 GHz, and the second frequency band is a band of 2.6 GHz.

12. The method of claim 8, further comprising acquiring at least one of a received signal strength indication (RSSI) or a reference signal received power (RSRP),
wherein at least one of the acquired RSSI or RSRP is further considered to determine an antenna element to transmit the first reference signal.

13. The method of claim 12, wherein the determining comprises replacing or changing a path to transmit the first reference signal in case that the acquired RSSI is smaller than a first threshold value or the RSRP is smaller than a second threshold value.
